# EUROPÄISCHE PATENTSCHRIFT

(11) **EP 1 507 597 B1**
(45) Veröffentlichungstag und Bekanntmachung des Hinweises auf die Patenterteilung: **08.11.2006**
(21) Anmeldenummer: 03740164.3
(22) Anmeldetag: 30.05.2003
(51) Int. Cl.: B05B 13/04, B05B 12/04, B05D 1/36, B05D 3/02, B05D 3/06

(54) **VERFAHREN ZUM AUFTRAGEN VON BESCHICHTUNGEN AUF OBERFLÄCHEN**
METHOD FOR APPLYING COATINGS TO SURFACES
PROCEDE D'APPLICATION DE REVETEMENT SUR DES SURFACES

(30) Priorität: 29.05.2002 DE 10224128
(43) Veröffentlichungstag der Anmeldung: 23.02.2005
(73) Patentinhaber: SCHMID RHYNER AG, CH-8134 Adliswil (CH)
(72) Erfinder: SCHLATTERBECK, Dirk, CH-8006 Zurich (CH); CEPPI, André, F., CH-8841 Gross (CH); JENNE, Frank, CH-8404 Winterthur (CH); SINGER, Andreas, CH-8636 Wald (CH)
(74) Vertreter: Herden, Andreas F.
(86) Internationale Anmeldenummer: PCT/EP2003/005711
(87) Internationale Veröffentlichungsnummer: WO 2003/099456

(56) Entgegenhaltungen:
- DE-A- 10 031 030
- US-A- 4 220 115
- US-A- 5 993 551

## Beschreibung

Die Erfindung betrifft ein Verfahren zum Auftragen von Beschichtungen auf Oberflächen, sowie eine Vorrichtung zum Beschichten von Oberflächen, insbesondere ein Verfahren zum berührungslosen Auftragen von Beschichtungen auf Oberflächen, sowie eine Vorrichtung zum berührungslosen Beschichten von Oberflächen.

Zur Beschichtung von Oberflächen mit Kunststoffen oder Lacken sind eine Reihe von berührungslosen Verfahren bekannt. Unter anderem werden dazu Spritz-, Flut,-Extrusions, Giess- oder Tauchverfahren oder Beschichtung mittels Schlitzdüsen oder Capcoating eingesetzt. Alle diese Verfahren sind jedoch für eine hochgenaue Dosierung des Beschichtungsmaterials mehr oder weniger ungeeignet oder zumindest sehr aufwendig. Insbesondere eignen sich derartige Beschichtungsverfahren auch nicht oder nur in begrenztem Maße, um ausgewählte Bereiche der Oberfläche selektiv zu beschichten. Gezielte Beschichtung ausgewählter Bereiche lässt sich andererseits beispielsweise durch nachträgliche Strukturierung, etwa die Strukturierung von Photolacken durch Belichtung und Entwicklung erzeugen. Diese werden auf Substrate zumeist durch Aufschleudern (Spincoating) aufgebracht, wodurch sich besonders dünne und homogene Beschichtungen mit Photolack erzielen lassen. Jedoch erfordert die nachträgliche Strukturierung zusätzliche Arbeitsgänge.

Des weiteren sind aus der Druckindustrie Verfahren zur nachträglichen Strukturierung von Druckformen, beispielsweise Photopolymerplatten für den Flexodruck oder Druckplatten für den Offsetdruck bekannt, bei denen durch Beschreiben oder selektives Belichten mittels einer Maske eines vollflächig beschichteten Substrates das Druckbild erzeugt wird. Diese Verfahren sind jedoch sehr aufwendig und teuer und der Kosten- und Arbeitseinsatz lohnt sich daher nur bei hohen Auflagen.

Aus der DE 100 31 030 A ist ein Verfahren zur Herstellung flächiger Bauteile mit vorbestimmtem Dekor, insbesondere von Frontplatten von Küchenelementen bekannt, wobei flächige Bauteile mittels eines hinsichtlich des sich ergebenden Aussehens programmierbaren Druckverfahrens zur Ausbildung eines vorbestimmten Musters mit Färbeflüssigkeiten bedruckt werden. Um eine dauerhafte Oberfläche mit diesem Verfahren zu erzielen, ist jedoch noch eine Beschichtung (Schutzschicht) notwendig, mit welcher die bedruckte Oberfläche versehen wird. Diese wird gemäß der DE 100 31 030 A mit konventionellen Methoden wie spritzen oder Rollen aufgebracht.

Das US-Patent 5, 993, 551 offenbart einen Lehmziegel mit imitiertem Erscheinungsbild, sowie ein Verfahren und eine Vorrichtung zur Herstellung solcher Ziegel. Zur Herstellung des gewünschten Erscheinungsbilds werden die Ziegel in zufälligen Mustern rechnergesteuert vor dem Trocknen und Brennen mit Engoben besprüht.

Das US-Patent 4, 220, 115 offenbart eine Vorrichtung, um Holzbretter für ein nachfolgendes Schneiden durch Aufsprühen von Farbe zu markieren. Das Aufsprühen erfolgt rechnergesteuert. Dieses Verfahren ist jedoch nicht dazu geeignet, Substrate mit dauerhaften Beschichtungen zu versehen.

Ebenso werden auch die aus dem Stand der Technik allgemein bekannten Tintenstrahldrucker nicht zum Auftrag von transparenten Beschichtungen verwendet. Vielmehr dienen diese Geräte zur Ausgabe oder Reproduktion von Druckerzeugnissen, ohne diese Produkte mit nachträglichem Beschichten weiter zu veredeln oder zu schützen.

Der Erfindung liegt daher die Aufgabe zugrunde, ein Verfahren und eine Vorrichtung bereitzustellen, mit dem eine hochgenaue Dosierung des Beschichtungsmaterials einerseits und die Möglichkeit der selektiven Beschichtung ausgewählter Bereiche oder der exakten Strukturierung andererseits bei der Beschichtung von Oberflächen geschaffen wird. Diese Aufgabe wird bereits in höchst überraschend einfacher Weise durch ein Verfahren gemäß Anspruch 1, sowie eine Vorrichtung gemäß Anspruch 39 gelöst. Vorteilhafte Weiterbildungen sind Gegenstand der jeweiligen abhängigen Unteransprüche.

Dementsprechend wird erfindungsgemäß nach Anspruch 1 verfahren.

Die mindestens eine Düse kann auch eine Anordnung mehrerer Düsen in einem Gitter oder Array beinhalten, welches durch gezieltes Ansprechen einzelner Düsen ein Muster erzeugt.

Mit dem erfindungsgemäßen Verfahren lassen sich also Materialien z.B. Beschichtungsmaterialien, wie insbesondere Lacke exakt dosiert auf der zu beschichtenden Oberfläche aufbringen. Durch die rechnergestützte Ansteuerung der mindestens einen Düse in Verbindung mit der Bewegung der Unterlage entlang der Oberfläche relativ zum Dosierkopf wird außerdem das punktgenaue, strukturierte Beschichten der Oberfläche ermöglicht.

Der Begriff eines fluiden Beschichtungsmaterials umfaßt in diesem Zusammenhang sowohl flüssige als auch gasförmige Materialien. Ebenso fallen unter diesen Begriff auch zähflüssige Substanzen. Solche zähflüssigen Materialien können beispielsweise erwärmt oder erhitzt aufgetragen werden, etwa um die Viskosität des Materials zu steuern.

Besonders gut kann das fluide Beschichtungsmaterial erfindungsgemäß durch Aufspritzen von Tröpfchen durch eine Düse aufgetragen werden, wenn der Auftrag mit einer Viskosität des Beschichtungsmaterials von 8 bis 100 mPa·s, vorzugsweise 8 bis 50 mPa·s besonders bevorzugt 8 bis 25 mPa·s erfolgt.

Gemäß einer Ausführungsform der Erfindung können aber auch fluide Materialien verarbeitet werden, die bei Raumtemperatur eine wesentlich höhere Viskosität aufweisen. So können mit dem erfindungsgemäßen Verfahren und einer geeignet ausgebildeten erfindungsgemäßen Vorrichtung auch fluide Materialien verarbeitet werden, deren Viskosität bei Raumtemperatur in einem Bereich von 50 mPa·s bis zu 10 Pa·s, vorzugsweise von 50 mPa·s bis zu 1 Pa·s, besonders bevorzugt von 50 mPa·s bis zu 250 mPa·s beträgt. Beispielsweise kann dazu das fluide Beschichtungsmaterial vorerwärmt werden, um die Viskosität zu senken. Gemäß einer Ausführungsform der Erfindung weist dementsprechend die erfindungsgemäße Vorrichtung eine Vorwärmeinrichtung zur Erwärmung des fluiden Materials auf.

So kann die Viskosität durch Erwärmung des fluiden Beschichtungsmaterials auf bis zu 300 °C, vorzugsweise auf bis zu 125 °C, besonders bevorzugt auf bis zu 80 °C gesenkt werden. Damit können dann auch hochviskose fluide Beschichtungsmaterialien zum Beispiel mit einem piezoelektrischen Ink-Jet-Druckkopf aufgebracht werden. Insbesondere bei niedrigviskosem Beschichtungsmaterial mit einer Viskosität im Bereich bis 250 mPa·s kann durch Erwärmung des Materials die Viskosität durch Erwärmen bis auf 30 mPa·s oder darunter gesenkt werden.

Die Erwärmung kann aber auch alternativ oder zusätzlich in der Düse des Dosierkopfes erfolgen. Eine Erwärmung erfolgt beispielsweise auch in einer Düse eines Bubble-Jet-Druckkopfes. Auch bei fluiden Beschichtungsmaterialien mit niedrigeren Viskositäten kann eine Vorerwärmung vorteilhaft sein, um Viskosität und/oder Oberflächenspannung des Materials zu senken und so kleinere Tropfengrößen beim berührungslosen Auftrag und eine feinere Dosierbarkeit zu erhalten.

Neben einer Viskositätserniedrigung durch Temperaturerhöhung können auch andere Maßnahmen vorteilhaft sein, um die Verarbeitung hoch- oder mittelviskoser Beschichtungs-materialien durchführen zu können. Unter anderem sind solche Maßnahmen von Vorteil, wenn eine Viskositätserniedrigung des Beschichtungsmaterials durch Erwärmung für eine Verarbeitung nicht ausreicht oder das Beschichtungsmaterial eine Erwärmung nicht gestattet. Beispielsweise kann die laterale Auflösung bei der Beschichtung reduziert werden. Auch kann die Tropfenfrequenz oder die Frequenz der Steuersignale, mit welchen die Düse angesteuert wird, an die Viskosität des Beschichtungsmaterials angepaßt werden.

Auch eine geeignete Modifikation des Dosierkopfes, etwa eine Modifikation der Düsen und/oder Kammern eines Ink-Jet-Druckkopfes an das Beschichtungsmaterials kann geeignet sein, die Verarbeitung solcher Beschichtungsmaterialien zu ermöglichen.

Das fluide Beschichtungsmaterial kann der Düse auch unter Überdruck zugeführt werden. Dazu kann die erfindungsgemäße Vorrichtung beispielsweise als Überdrucksystem zumindest eine der Düse vorgeschaltete Pumpeinrichtung aufweisen. Eine derartige Weiterbildung des erfindungsgemäßen Verfahrens, beziehungsweise der erfindungsgemäßen Vorrichtung kann jedoch nicht nur für die Verarbeitung hoch- und mittelviskoser Beschichtungsmaterialien von Vorteil sein. So kann beispielsweise mittels eines geeigneten Überdrucksystems die Tropfengröße reduziert und/oder die Verarbeitungsgeschwindigkeit erhöht werden.

Das Verfahren ist, nicht zuletzt auf Grund der Vorteile des berührungslosen Beschichtens, hinsichtlich des Materials und der Oberflächenbeschaffenheit der zu beschichtenden Unterlage nahezu unbeschränkt. Beispielsweise können mit dem erfindungsgemäßen Verfahren Unterlagen mit zellulosehaltigen Materialien wie Papier, Karton oder Holz berührungsfrei beschichtet oder lackiert werden. Auch Glas, Keramik, Metall oder Kunststoffe, Textilien, Fleece-Materialien und Verbundwerkstoffe als Unterlage lassen sich beschichten. Die Beschichtungen können sowohl dekorative als auch funktionelle Eigenschaften, wie etwa zur Oberflächenversiegelung oder als Barriere aufweisen. Mit der erfindungsgemäßen Beschichtung können beispielsweise durch die Möglichkeit der Strukturierung der Beschichtung auch hochgenaue Druckvorlagen für verschiedene Druckverfahren, wie Offsetdruck oder Siebdruck schnell und in höchst einfacher Weise hergestellt werden.

Ebenso können Bereiche unterschiedlicher Schichtdicke durch entsprechende Ansteuerung des Dosierkopfs, beziehungsweise der Düse hergestellt werden, um etwa dreidimensional strukturierte Beschichtungen herzustellen. Als Beispiel sei eine Strukturierung genannt, die den sogenannten Lotusblüteneffekt zeigt. Außerdem können Bereiche unterschiedlicher Materialien neben- und aufeinander aufgebracht werden.

Besonders genaue Dosierungen oder Strukturierungen lassen sich dabei erreichen, wenn das Auftragen durch eine Bubble-Jet-Düse und/oder eine Ink-Jet- oder Piezo-Jet-Düse erfolgt. Mit derartigen Düsen, beziehungsweise entsprechenden Dosierköpfe, wie sie in ähnlicher Weise in Tintenstrahldruckern eingesetzt werden, lassen sich kleinste Mengen von flüssigem Beschichtungsmaterial im Bereich einiger Nanogramm unter Ansprechen auf ein Steuersignal gezielt auftragen.

Ink-Jet- oder Piezo-Jet-Düsen besitzen gegenüber Bubble-Jet-Düsen außerdem den weiteren Vorteil, daß das Beschichtungsmaterial nicht erhitzt wird. Dies kann beispielsweise besonders dann nützlich sein, wenn das Beschichtungsmaterial temperaturempfindlich ist, etwa weil durch Wärmeeinwirkung eine Polymerisation initiiert wird. Mit allen diesen Düsentypen läßt sich eine Drop-on-Demand-Technik für die aufzutragenden Beschichtungen realisieren, bei welcher unter Ansprechen auf ein Steuersignal jeweils eine vorbestimmte Menge von Beschichtungsmaterial mit der Düse aufgetragen wird.

Außerdem kann der Schritt des Auftragens eines flüssigen Beschichtungsmaterials den Schritt des Öffnens eines Ventils, wie insbesondere eines Piezoventils und/oder eines elektromagnetisch gesteuerten Ventils umfassen. Eine solche Ventilsteuerung ist insbesondere dann vorteilhaft, wenn größere Mengen von Beschichtungsmaterial aufgetragen werden sollen, beispielsweise bei Beschichtungsvorgängen mit großem Vorschub der zu beschichtenden Oberfläche, wie es z.B. beim Lackieren von Druckerzeugnissen angewendet wird. Auch ist eine solche Ausführungsform der Erfindung für hoch- und mittleviskose Beschichtungsmaterialien sehr geeignet. In Verbindung mit einem Ventil, wie etwa einem Piezoventil ist auch die Verwendung eines wie oben beschriebenen Überdrucksystems, etwa mit einer der Düse vorgeschalteten Pumpeinrichtung, beziehungsweise die Zuführung des fluiden Beschichtungsmaterials unter Überdruck besonders vorteilhaft.

Die Vorrichtung kann mit Vorteil auch eine Einspritzeinrichtung oder ein Einspritzsystem, wie es in gleicher oder ähnlicher Weise etwa in Verbrennungsmotoren, wie Einspritz-Ottomotoren oder Dieselmotoren eingesetzt wird, umfassen. Derartige Systeme umfassen in der Regel eine Einspritzdüse mit elektromagnetisch gesteuertem Ventil. Auch weisen solche Systeme im allgemeinen Pumpeinrichtungen auf, welche den Kraftstoff der Düse unter hohem Überdruck zuführen. Ebenso wie etwa Ink-Jet- oder Piezo-Jet- oder Bubble-Jet-Druckköpfe sind solche Systeme unter anderem durch die Großserienfertigung und lange Entwicklungszeit sehr ausgereift, standfest und preisgünstig.

Der Anwendbarkeit des Verfahrens sind hinsichtlich der verwendbaren Beschichtungsmaterialien kaum Einschränkungen gesetzt. Voraussetzung ist lediglich, daß die Beschichtungsmaterialien bei der Verarbeitungstemperatur fluid sind. Beispielsweise kann der Schritt des Auftragens eines fluiden Beschichtungsmaterials auch den Schritt des Auftragens eines fluiden Beschichtungsmaterials umfassen, welches einen thermoplastischen Kunststoff aufweist. Thermoplastische Kunststoffe können zum Beispiel geschmolzen, in einem Lösungsmittel gelöst oder als Dispersion durch die Düse aufgetragen werden. Für Beschichtungen, die thermoplastischen Kunststoff aufweisen, sind unter anderem Polyethylen, Polypropylen, Polyacrylat, Polymethacrylat, Polyacrylnitril, Polybutadien, Polyamid, Polyester, Polyether, Polyetherketone, Polyvinylacetate, Polyacetale, Polyvinylacetate, Polyolefine, Polycarbonat, Polyether-Block-Amide, PSU, PES, PPS, PVC, PVDC, PET, PS, PTFE, PVDF, POM, Polyimide, Polyimid-Derivate, Cellulosederivate und Copolymerisate geeignet.

Es ist jedoch nicht nur möglich, Polymere als Rohstoff für die Beschichtung einzusetzen. Vielmehr kann die Beschichtung auch durch eine chemische Reaktion, wie beispielsweise eine Polymerisation auf der zu beschichtenden Oberfläche erfolgen. Dies ist vorteilhaft, da auf diese Weise etwa auch Beschichtungen hergestellt werden können, die ansonsten unlöslich sind, wie zum Beispiel duroplastische Kunststoffe. Ausserdem kann auf diese Weise Lösungsmittelfrei gearbeitet werden. Dazu kann der Schritt des Auftragens eines fluiden Beschichtungsmaterials vorteilhaft den Schritt des Auftragens eines Beschichtungsmaterials umfassen, welches wenigstens eine Komponente eines chemischen Reaktivsystems aufweist. Für derartige Beschichtungen geeignet sind dabei unter anderem isocyanatvernetzende Systeme, Polyurethane Epoxidsysteme, Acrylate, Methacrylate, Silikone sowie Derivate eines dieser Systeme. Selbstverständlich können diese Systeme gegebenenfalls auch miteinander kombiniert werden. Der Vorteil liegt u.a. in der Vermeidung der oft kurzen Topfzeiten von Reaktivsystemen. Auch die Problematik der Reinigung und Wartung wird auf diese Weise deutlich entschärft.

Mit Hilfe dieser Vorgehensweise lassen sich z.B. auch reaktive Mischungen in der gewünschten Dosierung aufbringen und örtlich variieren um ein ortsaufgelöstes Eigenschaftsprofil zu erzeugen. Hierzu können durch die mindestens eine Düse auch mehrere Komponenten auf der Oberfläche gemischt und zur Reaktion gebracht werden. Hierbei ermöglicht die mikrofeine Verteilung der Komponenten auf dem Substrat eine homogene Mischung der Reaktivkomponenten.

Außerdem kann der Schritt des Auftragens eines fluiden Beschichtungsmaterials den Schritt des Auftragens eines Beschichtungsmaterials umfassen, welches wenigstens eine Komponente eines thermisch vernetzbaren Systems aufweist. Thermisch vernetzbare Systeme als Beschichtungsmaterial sind vorteilhaft, da sich die Vernetzung hier besonders einfach durch Erwärmung der aufgetragenen Beschichtung in Gang bringen läßt. Derartige thermisch vernetzbare Systeme können zum Beispiel Polyester-Melamin, -Harnstoff, Epoxidsysteme, Acrylate, Methacrylate oder Polyestersysteme umfassen.

Gemäß einer besonders bevorzugten Ausgestaltung des erfindungsgemäßen Verfahrens kann der Schritt des Auftragens eines fluiden Beschichtungsmaterials außerdem den Schritt des Auftragens eines Beschichtungsmaterials umfassen, welches wenigstens eine Komponente eines strahlenhärtbaren Systems aufweist.

Diese Lacke und Beschichtungen lassen sich besonders gut mit dem erfindungsgemäßen Verfahren verarbeiten. Beispielsweise können diese im allgemeinen problemlos mit Bubble-Jet oder Ink-Jet oder Piezo-Jet aufgebracht werden. Die schnelle Aushärtbarkeit strahlenhärtbarer Beschichtungsmaterialien kommt der Möglichkeit der hohen Beschichtungsgeschwindigkeit des erfindungsgemässen Verfahrens sehr entgegen, da sich hierdurch ein sehr hoher Durchsatz beim Beschichtungsprozess erzielen lässt. Solche strahlenhärtbare Systeme können unter anderem Acrylate, Methacrylate, Polyvinylether, Polyester auf Malein- und Fumarsäurebasis, Epoxide, Styrolverbindungen oder Siliconacrylate umfassen. Selbstverständlich können als strahlenhärtbare Systeme auch hier Kombinationen der oben genannten Systeme verwendet werden.

Das Verfestigen der aufgetragenen Beschichtung kann beispielsweise den Schritt des Trocknens des Beschichtungsmaterials umfassen. Im Falle von gelöstem Beschichtungsmaterial, wie beispielsweise bei gelösten Kunststoffen wird dabei die Verfestigung durch Abdampfen des Lösungsmittels erreicht. Die Trocknung kann dabei einfach thermisch erfolgen. Jedoch ist auch die Vakuumtrocknung oder Trocknung mittels geeigneter Trockenmittel geeignet, was bei temperaturempfindlichen Beschichtungen von Vorteil sein kann. Außerdem lassen sich bei thermisch vernetzbaren Systemen die Trocknung, beziehungsweise das Abdampfen von Lösungsmittel und die Vernetzung in einem Arbeitsschritt durchführen.

Weiterhin kann der Schritt des Verfestigens des fluiden Beschichtungsmaterials auf der Oberfläche auch den Schritt der Strahlenhärtung eines geeigneten Beschichtungsmaterials umfassen. Strahlenhärtung und Trocknung können für die Verfestigung auch vorteilhaft miteinander kombiniert werden.

Die Verfestigung kann ebenso auch durch eine chemische Reaktion von Bestandteilen der aufgebrachten Beschichtung erfolgen. Beispielsweise können Komponenten der Beschichtung durch Polymerisation und/oder Vernetzung untereinander reagieren. Die Vernetzung kann dabei auch thermisch in Gang gesetzt werden.

Eine Verfestigung der Beschichtung kann außerdem durch Reagieren des Beschichtungsmaterials mit einer Vorbeschichtung auf der Oberfläche geschehen. Beispielsweise kann dazu bei einem Mehrkomponentensystem die Oberfläche mit einer Vorbeschichung versehen sein, welche eine Komponente des Systems aufweist. Durch die zumindest eine Düse wird dann ein Beschichtungsmaterial aufgetragen, welches eine weitere Komponente des Mehrkomponentensystems aufweist. Die Komponenten kommen dann auf der Oberfläche in Kontakt und reagieren miteinander unter Bildung eines Mehrkomponenten-Kunststoffs. In gleicher Weise kann auch eine Reaktion der durch die zumindest eine Düse aufgetragenen Beschichtung mit einer Nachbeschichtung erfolgen, beispielsweise durch eine nachfolgende Vorhanggießbeschichtung mit einem Beschichtungsmaterial, welches eine weitere Komponente eines Mehrkomponentensystems aufweist.

Von Vorteil ist ferner eine Ausgestaltung des erfindungsgemäßen Verfahrens, wobei der Dosierkopf zumindest eine erste Düse und zumindest eine zweite Düse aufweist und der Schritt des Auftragens eines fluiden Beschichtungsmaterials auf die Oberfläche durch die Düse unter Ansprechen auf ein von einem Rechner erzeugtes Steuersignal den Schritt des Auftragens eines ersten Beschichtungsmaterials durch die zumindest eine erste Düse und eines zweiten Beschichtungsmaterials durch die zumindest eine zweite Düse umfaßt. Beispielsweise können das erste und zweite Beschichtungsmaterial jeweils Komponenten eines Mehrkomponentensystems aufweisen. Damit werden die Komponenten auf der zu beschichtenden Oberfläche in Kontakt gebracht und es kann dadurch eine Polymerisation oder Vernetzung in Gang gesetzt werden. Außerdem kann diese Variante des Verfahrens auch dazu benutzt werden, Mehrschichtsysteme in einem Verarbeitungsschritt aufzutragen. Ebenso können, bedingt durch die Möglichkeit des punktgenauen Auftrags verschiedene Beschichtungen auch strukturiert nebeneinander, beziehungsweise ineinandergreifend aufgebracht werden.

Mittels des erfindungsgemäßen Verfahrens können außerdem Druckformen hergestellt werden. Als Druckformen für Druckmaschinen werden zumeist zylindrische Druckwalzen oder, beispielsweise im Offsetdruck auf Druckwalzen befestigte Bleche verwendet, welche die Druckform aufweisen. Das Herstellen und Wechseln der Druckformen ist jedoch in der Regel aufwendig. Mit den durch das erfindungsgemäße Verfahren herstellbaren exakt strukturierten Beschichtungen können jedoch Druckformen durch Auftragen strukturierter Beschichtungen direkt und ohne weitere Zwischenschritte hergestellt werden. Entsprechend umfaßt bei einer Weiterbildung des Verfahrens der Schritt des Auftragens eines fluiden Beschichtungsmaterials auf die Oberfläche durch die Düse unter Ansprechen auf ein von einem Rechner erzeugtes Steuersignal vorteilhaft den Schritt des Bebilderns einer Druckform. Die aufgetragene Beschichtung kann dabei je nach Art und Struktur des Beschichtungsmaterials unter anderem für Hoch- Tief- Rakel- oder Offsetdruck verwendet werden.

Die Möglichkeit, Mehrkomponentensysteme in Situ zu erzeugen und auf der zu beschichtenden Oberfläche in jedem gewünschten Verhältnis zu mischen und zur Reaktion zu bringen, kann zum Beispiel angewendet werden, um die Bebilderung von Druckformen direkt in der Druckmaschine durchzuführen, wobei sowohl zweidimensionale Strukturen, etwa durch ortsaufgelöst unterschiedliche chemische Eigenschaften der Beschichtung, als auch dreidimensionale ortsaufgelöste Strukturen unterschiedlicher Schichtdicke durch ortsaufgelöste Dickschichtauftragung aufgetragen werden können. Hierdurch lassen sich zum Beispiel Druckformen für den Offset- bzw. für den Flexodruck erzeugen.

Ebenso können so für dekorative Beschichtungen ortsaufgelöst verschiedenartige Beschichtungen nebeneinander oder übereinander aufgebracht werden. Beispielsweise können Strukturen mit Glanz- und Matteffekt nebeneinander aufgetragen werden.

Das Bewegen der Unterlage entlang der zu beschichtenden Oberfläche relativ zum Dosierkopf und/oder das Bewegen des Dosierkopfs relativ zur Oberfläche der Unterlage kann mit Vorteil den Schritt des Vorschiebens der Unterlage entlang einer ersten Richtung oder Vorschubrichtung umfassen. Dabei wird durch eine geeignete Einrichtung die Unterlage entlang der ersten Richtung durch die Beschichtungsvorrichtung vorgeschoben und so an der zumindest einen Düse vorbeibewegt. Vorteilhaft geschieht auch der Vorschub rechnergesteuert oder wird rechnerunterstützt erfasst, so daß während der rechnergestützten Ansteuerung des Dosierkopfes die Beschichtungsposition, also der Punkt auf der Oberfläche welcher der Düse gegenüberliegt, bekannt ist.

Die Verarbeitungsgeschwindigkeit ist prinzipiell bis auf physikalische Grenzen durch Trocknung oder Härtung und der Auftragbarkeit des Beschichtungsmaterials nicht beschränkt. Die Unterlage kann relativ zum Dosierkopf entlang der Vorschubrichtung mit einer Geschwindigkeit bis zu 2000 Metern pro Minute, bevorzugt mit einer Geschwindigkeit bis zu 500 Metern pro Minute bewegt werden. Gemäß einer Ausführungsform der Erfindung werden Vorschubgeschwindigkeiten von 150 Metern pro Minute oder mehr erreicht. Insbesondere im Rollenoffsetdruck wird vielfach auch mit Vorschubgeschwindigkeiten von 300 Metern pro Minute oder mehr gearbeitet, was für das erfindungsgemäße Verfahren erreichbar ist, so daß sich die Erfindung unter anderem auch in Rollenoffset-Druckmaschinen gut implementieren läßt. Die Wahl der geeigneten Vorschubgeschwindigkeit wird dabei vor allem durch die zu erzielende Ortsauflösung, die Schichtdicke, die unter anderem durch die Düse bedingte Tropfengröße und die Ansteuerfrequenz mit welcher die Düse vom Rechner angesteuert wird, bestimmt. Auch die Art des Beschichtungsmaterials, wie etwa dessen Viskosität kann die Geschwindigkeit in Vorschubrichtung und damit die Verarbeitungszeit oder den Durchsatz beeinflussen. Umgekehrt ist es möglich, zur Erzielung höherer Vorschubgeschwindigkeiten neben konstruktiven Änderungen auch das Beschichtungsmaterial anzupassen.

Außerdem ist es günstig, wenn der Dosierkopf entlang einer zweiten, zur ersten Richtung quer, beziehungsweise nicht parallel verlaufenden, vorzugsweise im wesentlichen senkrechten Richtung bewegt wird. Durch Kombination dieser beiden Bewegungen lassen sich in einfacher Weise mit einer begrenzten Breite des Dosierkopfes, beziehungsweise mit einer begrenzten Anzahl von Düsen auch unterschiedlich breite Unterlagen flächendeckend und strukturiert beschichten. Selbstverständlich lässt sich ein breiteres Substrat auch durch eine grössere Anzahl von nebeneinander angeordneten Düsen abdecken.

Weiterhin kann es vorteilhaft sein, auch eine Bewegung des Düsenkopfs senkrecht zur beschichtenden Fläche zu ermöglichen, da es hierdurch auch dreidimensionale Substrate beschichtet werden können.

Letztlich sind jedoch der Bewegung des Dosierkopfs keine Grenzen gesetzt, wodurch auch ein Einsatz des Dosierkopfs in Mehrachssystemen möglich ist. Damit können auch dreidimensionale Körper beschichtet oder sogar geformt werden. Weiterhin kann auch kabel-, draht- oder schlauchartiges Material beschichtet werden. Hier findet die Bewegung des Dosierkopfs auf einer Kreisbahn statt oder es werden beispielsweise ringförmig mehrere Düsen angeordnet. Gegenüber der normalerweise für die Beschichtung dieser Geometrie üblichen Extrusion besteht der Vorteil des erfindungsgemäßen Verfahrens unter anderem darin, dass reaktive Mehrkomponentenmischungen aufgebracht werden können, die erst auf dem Substrat reagieren.

Die zu beschichtende Unterlage kann außerdem bahnartig sein und kann bei entsprechender Flexibilität des Materials auf einer Rolle aufgewickelt sein. Der Schritt des Bewegens der Unterlage entlang der zu beschichtenden Oberfläche relativ zum Dosierkopf und/oder des Bewegens des Dosierkopfs relativ zu dieser Oberfläche der Unterlage kann dann mit Vorteil den Schritt des Abwickelns des Materials von der Rolle umfassen. Ein derartig ausgestaltetes Verfahren kann für eine Vielzahl von industriellen Anwendungen eingesetzt werden. Als geeignete bahnartige Unterlagen dafür kommen beispielsweise Papier- oder Kartonbahnen, Glasbahnen, Textilien und Gewebe und Kunststoff- oder Metallfolien in Betracht. Auch die Beschichtung von Verbundwerkstoffen, wie Laminatfolien und auch deren Herstellung kann mit dem Verfahren durchgeführt werden.

Außerdem kann der Schritt des Bewegens der Unterlage entlang der zu beschichtenden Oberfläche relativ zum Dosierkopf mit Vorteil den Schritt des Aufwickelns der Unterlage auf eine Rolle umfassen. Durch Kombination mit dem Abwickeln der Unterlage läßt sich so außerdem ein Rolle-zu-Rolle-Fertigungsprozeß erreichen.

Um komplexere Beschichtungen zu erzeugen, kann das Verfahren auch so ausgestaltet sein, daß die Schritte des Bewegens einer Unterlage mit einer zu beschichtenden Oberfläche entlang dieser Oberfläche relativ zum Dosierkopf und/oder des Bewegens des Dosierkopfs relativ zu einer zu beschichtenden Oberfläche einer Unterlage und des Auftragens eines fluiden Beschichtungsmaterials auf die Oberfläche durch die Düse unter Ansprechen auf ein von einem Rechner erzeugtes Steuersignal mehrfach durchgeführt werden. Auf diese Weise lassen sich sowohl dicke Beschichtungen, als auch insbesondere Multilayerstrukturen erzeugen. Dabei können bei der mehrfachen Beschichtung für die einzelnen Lagen auch unterschiedliche Beschichtungsmaterialien eingesetzt werden.

Das Verfahren kann außerdem vorteilhaft den Schritt des zumindest teilweise Entfernens der Beschichtung auf der Oberfläche umfassen. Dies ist besonders dann sinnvoll, wenn die Beschichtung als Maske dient. So kann auch diese Ausgestaltung des Verfahrens zur strukturierten Metallisierung, etwa zur Herstellung von Leiterbahnen verwendet werden. Beispielsweise wird dazu eine entsprechend negativ strukturierte Polymerbeschichtung aufgetragen und die so beschichtete Oberfläche anschließend metallisiert. Die Metallisierung kann dabei beispielsweise durch Sputtern oder Bedampfen erfolgen. Durch Entfernen der strukturiert aufgetragenen Polymerbeschichtung wird dann die Metallisierung auf den beschichteten Bereichen abgehoben, wobei auf den vorher nicht beschichteten Bereichen die Metallisierung stehenbleibt (Lift-off-Technik). Diese Prozesse werden normalerweise in Resisttechnologie durchgeführt. Vorteil des erfindungsgemäßen Verfahrens demgegenüber ist hier ebenfalls der Wegfall der aufwendigen Belichtungs- und Entwicklungsschritte des Photoresists.

Auch dieses Verfahren zum Herstellen von strukturierten Metallisierungen auf einer Unterlage kann für die Herstellung von Multilayer-Platinen durch mehrfaches Wiederholen der Arbeitsschritte erfolgen, wobei zwischen jeder der Metallisierungen eine Lackierung oder Kunststoffbeschichtung als Isolatorschicht aufgetragen werden kann.

Das erfindungsgemäße Verfahren läßt sich auch in vielfacher Weise zur Herstellung optischer Komponenten einsetzen. Mit einer strukturierten Beschichtung, die transparente Beschichtungsmaterialien umfaßt, können so optische Strukturen auf der Unterlage definiert werden. Beispielsweise kann die Kombination von ortsaufgelöster Beschichtung und der Einsatz mehrerer Beschichtungsmaterialien vorteilhaft dazu eingesetzt werden, optische Komponenten in der Beschichtung zu definieren. Hierfür muß ein Bereich in der Schicht einen anderen Brechungsindex aufweisen, als benachbarte Bereiche. Dementsprechend umfaßt bei einer solchen Weiterbildung der Erfindung der Schritt des Auftragens eines fluiden Beschichtungsmaterials auf die Oberfläche durch die Düse unter Ansprechen auf ein von einem Rechner erzeugtes Steuersignal den Schritt des Auftragens von Beschichtungsmaterial auf zumindest einen Bereich, welches einen gegenüber angrenzenden Bereichen anderen Brechungsindex aufweist oder z.B. sogar für die verwendeten Wellenlängen undurchlässig ist. Auch die Verwendung von mehrkomponentigen Reaktivmischungen kann durch gezielten Ersatz einer oder mehrerer Einzelkomponenten erfolgen, die Einfluss auf den Brechungsindex haben. Durch gezielte Erzeugung eines Konzentrationsgradienten beim genannten Ersatz einer oder mehrerer Komponenten mit abweichendem Brechungsindex lässt sich auf diese Art auch ein Brechungsindexgradient erzeugen.

Neben Wellenleitern als optische Komponenten lassen sich auf diese Weise selbstverständlich auch andere optische Komponenten, wie etwa Gitter herstellen. Ebenso kann das erfindungsgemäße Verfahren auch besonders vorteilhaft dazu benutzt werden, komplexere, mehrkomponentige optische Bauteile, wie etwa Arrayed Waveguide Gratings, Splitter oder Combiner, oder auch Mach-Zehnder Interferometer herzustellen.

Durch mehrlagige Beschichtung oder in dicken Schichten kann auch die vertikale Position des Lichtwellenleiters gezielt gesteuert werden. Hierdurch ergeben sich viele Anwendungen im Bereich der optischen Lichtwellenleiter, wie z.B. die Anbindung von planaren Wellenleiterstrukturen an dreidimensional geformte Wellenleiter, wie z.B. Glasfasern oder andere optische Bauteile. Oder aber die Herstellung von optischen Funktionsschichten in Multilayerplatinen durch die Aufbringung von optisch funktionalisierten Zwischenschichten, die optische Verbindung von Bauelementen auf herkömmlichen gedruckten Schaltungen in einer zusätzlichen Schicht. Bedingt durch das Herstellungsverfahren, in dem es möglich ist, begrenzt auch Diffusion zwischen benachbarten, chemisch unterschiedlichen Bereichen bis zur Aushärtung der Schicht zuzulassen, ist es möglich auch einen Brechungsindexgradienten zu erzeugen, wodurch sich die Lichtführung in den Lichtwellenleitern gezielt beeinflussen lässt.

Die Erzeugung unterschiedlicher Brechungsindizes in optisch transparenten Schichten kann auch zur Erzeugung von optischen Strukturen in den Lackschichten ausgenutzt werden. Hierdurch kann ein Produkt fälschungssicher gekennzeichnet werden oder es können Muster für eine automatische Erfassung mittels optischer Lesegeräte aufgebracht werden.

Das Verfahren kann weiterhin mit Vorteil den Schritt des Ausrichtens der Unterlage oder die Erfassung der Position und des Winkels der Unterlage relativ zum Dosierkopf umfassen. Durch das Ausrichten der Unterlage oder des Beschichtungsmuster auf die Unterlage wird die richtige Positionierung vom Beschichtungsmuster auf der Unterlage sichergestellt. Das Ausrichten kann dabei mechanisch oder auch optisch kontrolliert werden. Die Ausrichtung relativ zum Dosierkopf umfaßt dabei nicht nur eine Ausrichtung der Unterlage relativ zu einem festgehaltenen Dosierkopf. Vielmehr kann die Ausrichtung auch besonders vorteilhaft durch Anpassung der Position des Dosierkopfs oder durch rechnergestützte Ausrichtung des durch den Dosierkopf erzeugten Beschichtungsmusters vorgenommen werden. Das Ausrichten des Beschichtungsmusters relativ zur beschichtenden Unterlage, zum Beispiel durch Erfassung der Lage und Ausrichtung jedes einzelnen zu beschichtenden Substrates, ermöglicht es, das Beschichtungsmuster rechnergestützt an Form und Lage des Substrats angepaßt zu positionieren. Die Erfassung kann beispielsweise optisch mittels 3-Punkt-Laser durchgeführt werden. Hierin liegt unter anderem ein besonderer Vorteil dieser erfindungsgemässen Ausgestaltung des Verfahrens, da die Ausrichtung des Beschichtungmuster auf das Substrat so schnell erfolgt, dass auf eine mechanisch oft aufwendige exakte Positionierung oder vor allem bei grossen und/oder schweren Substraten kaum zu bewerkstelligende nachträgliche Ausrichtung des zu beschichtenden Substrats verzichtet werden kann.

Im Rahmen der Erfindung liegt es auch, eine Beschichtungsvorrichtung gemäß Anspruch 35 anzugeben, welche insbesondere geeignet ist, das oben beschriebene, erfindungsgemäße Verfahren auszuführen.

Die Einrichtung zum Bewegen der Unterlage relativ zum Dosierkopf und/oder des Dosierkopfs relativ zu der zu beschichtenden Oberfläche kann selbstverständlich auch eingerichtet sein, eine räumliche Bewegung des Dosierkopfes in allen drei Raumrichtungen, etwa zur Beschichtung dreidimensionaler Körper auszuführen. Im Fall von ebenen Oberflächen kann das Substrat auch in Ruhe bleiben und der Dosierkopf wird entlang zweier im wesentlichen zueinander senkrecht stehender Achsen bewegt.

Der Dosierkopf ist dabei bevorzugt so angeordnet, daß die zumindest eine Düse die zu beschichtende Unterlage nicht berührt. Damit wird in vorteilhafter Weise ein berührungsloses Beschichten der Unterlage ermöglicht.

Vorteilhaft kann die Einrichtung zum Bewegen einer Unterlage mit einer zu beschichtenden Oberfläche entlang dieser Oberfläche relativ zum Dosierkopf und/oder zum Bewegen des Dosierkopfs relativ zu einer zu beschichtenden Oberfläche einer Unterlage ferner eine Transporteinrichtung zum Transport der Unterlage entlang einer ersten Richtung umfassen. Mit der Transporteinrichtung können die zu beschichtenden Unterlagen in der Vorrichtung bewegt und insbesondere durch die Vorrichtung hindurch transportiert werden, was einen kontinuierlichen Beschichtungsprozeß ermöglicht.

Weiterhin kann die Beschichtungseinheit außerdem eine Einrichtung zum Bewegen des Dosierkopfs entlang einer zweiten, zur ersten Richtung im wesentlichen senkrechten Richtung umfassen. Damit kann die zumindest eine Düse an jedem Punkt der zu beschichtenden Oberfläche positioniert werden, um dort dosiert die Beschichtung aufbringen zu können. Dadurch, daß diese Einrichtung zur Bewegung entlang einer zur Transportrichtung der Unterlage im wesentlichen senkrechten Richtung in der Beschichtungseinheit untergebracht ist, kann außerdem die Beschichtungseinheit leicht in bereits bestehende Anlagen, wie beipielsweise Druck- oder Lackieranlagen integriert werden, da diese vielfach bereits Transporteinrichtungen aufweisen.

Für die kontinuierliche Beschichtung von dreidimensionalen Substraten kann es weiterhin von Vorteil sein, den Dosierkopf so zu montieren, dass auch eine Bewegung in einer dritten Dimension und gegebenenfalls sogar eine Drehbewegung des Kopfes möglich ist, um alle Stellen eines dreidimensionalen Körpers beschichten zu können.

Die zumindest eine Düse kann besonders vorteilhaft eine Bubble-Jet-Düse und/oder eine Ink-Jet- oder Piezo-Jet-Düse umfassen. Diese Düsentypen, sowie die entsprechenden Dosierköpfe werden in großen Stückzahlen in Druckern eingesetzt, so daß diese Düsen entsprechend preiswert sind. Zudem erlaubt der Einsatz derartiger Düsen die in der Tintenstrahl-Drucktechnologie erreichbare hohe Ortsgenauigkeit und Genauigkeit bei der Dosierung für den Auftrag von Beschichtungsmaterialien wie z.B. Kunststoffbeschichtungen oder Lacken zu nutzen. Die zumindest eine Düse kann ferner an ein Ventil, insbesondere an ein Piezoventil oder ein elektromagnetisch gesteuertes Ventil angeschlossen sein oder durch das Ventil betätigt werden. Das Ventil kann insbesondere steuerbar ausgelegt sein, um eine rechnergestützte Dosierung des Beschichtungsmaterials durch Steuerung des Ventils zu ermöglichen.

Um die Beschichtungsvorgänge mit hohem Durchsatz bei möglichst geringem Platzbedarf der Beschichtungsanlage zu ermöglichen, kann die Vorrichtung außerdem eine Einrichtung zum Verfestigen der beschichteten Oberfläche der Unterlage aufweisen, wodurch in der Vorrichtung kurze Trockenstrecken ausreichend sind. Die beschichtete Unterlage kann dann nach dem Ende der Beschichtung und Verfestigung sofort entnommen oder weiterverarbeitet werden, ohne daß eine sonst etwa noch nicht vollständig verfestigte oder ausgehärtetete Beschichtung beschädigt werden kann.

Die Einrichtung zum Verfestigen der beschichteten Oberfläche der Unterlage kann zum Beispiel eine Trocknungseinrichtung, wie insbesondere eine Infrarot- und/oder Wärmetrocknungseinrichtung umfassen. Für den Auftrag von strahlungshärtbaren Beschichtungen, wie beispielsweise UV-oder elektronenstrahlhärtbaren Lacken ist außerdem eine UV-oder Elektronenstrahlhärtungseinrichtung von Vorteil.

Schließlich kann die Vorrichtung eine Einrichtung zur Ausrichtung der Unterlage umfassen. Mittels dieser Einrichtung wird die Unterlage vor und/oder während dem Beschichtungsvorgang exakt ausgerichtet, damit die Düse des Dosierkopfes entsprechend exakt ohne Anpassung reproduzierbar die selbe Position beschichtet.

Die Vorrichtung kann außerdem eine Einrichtung zur Messung der Position der Unterlage aufweisen. Dies ermöglicht beispielsweise eine Kontrolle und Nachkorrektur der Position der Unterlage oder des Dosierkopfs oder bei Verwendung mehrerer Düsen in einem Array auch die Ausrichtung des Beschichtungsmusters auf die Unterlage, die dann nicht speziell positioniert werden muss. Die Position kann dabei bevorzugt optisch oder mechanisch bestimmt werden. Vorteilhaft ist dabei insbesondere eine Kombination mit einer Einrichtung zum Ausrichten der Unterlage oder des Dosierkopfs. Auf diese Weise kann vor und während der Beschichtung die Position des Beschichtungsbildes relativ zur Unterlage kontrolliert und korrigiert werden.

Weiterhin liegt es im Rahmen der Erfindung, eine mittels des erfindungsgemäßen Verfahrens und/oder der erfindungsgemäßen Vorrichtung beschichtete Unterlage anzugeben- Entsprechend einer mehrfachen Beschichtung kann eine solcherart beschichtete Unterlage auch mehrere Lagen aufweisen. Ebenso kann durch das Auftragen verschiedener Materialien die Beschichtung Bereiche unterschiedlicher Materialien aufweisen. Diese können sich bei mehrfacher Beschichtung auch in verschiedenen Lagen befinden.

Durch Auftragen transparenter Beschichtungsmaterialien lassen sich, wie oben beschrieben auch optische Komponenten, wie etwa Wellenleiter in der Beschichtung definieren. Insbesondere können durch strukturiertes Auftragen auch mehrkomponentige optische Elemente, wie beispielsweise Gitter und/oder Arrayed-Waveguide Gratings und/oder Mach-Zehnder Interferometer mit der Beschichtung hergestellt werden.

Die Erfindung wird nachfolgend anhand bevorzugter Ausführungsformen und unter Bezugnahme auf die beigefügten Zeichnungen näher erläutert. Dabei verweisen gleich Bezugszeichen auf gleiche oder ähnliche Teile.

Es zeigen:
- Fig. 1: eine erste Ausführungsform einer erfindungsgemäßen Vorrichtung für die Beschichtung bahnförmiger Unterlagen,
- Fig. 2: eine Ausführungsform einer erfindungsgemäßen Vorrichtung für die Beschichtung von Einzelsubstraten,
- Fig. 3: eine schematische Aufsicht auf eine Beschichtungseinheit,
- Fig. 4: schematisch die Herstellung einer strukturierten Beschichtung einer Oberfläche einer zu beschichtenden Unterlage,
- Fig. 5: Teile einer weiteren Ausführungsform der erfindungsgemäßen Vorrichtung,
- Fig. 6A - 6C: Verfahrensschritte zur Herstellung einer mehrlagigen Beschichtung mit Wellenleiterstrukturen, und
- Fig. 7: schematisch eine Vorrichtung zur Herstellung von Druckformen,
- Fig. 8: schematisch ein Ausführungsbeispiel einer Beschichtungseinrichtung
- Fig. 9A - 9D: schematisch verschiedene Anordnungen von Dosierköpfen

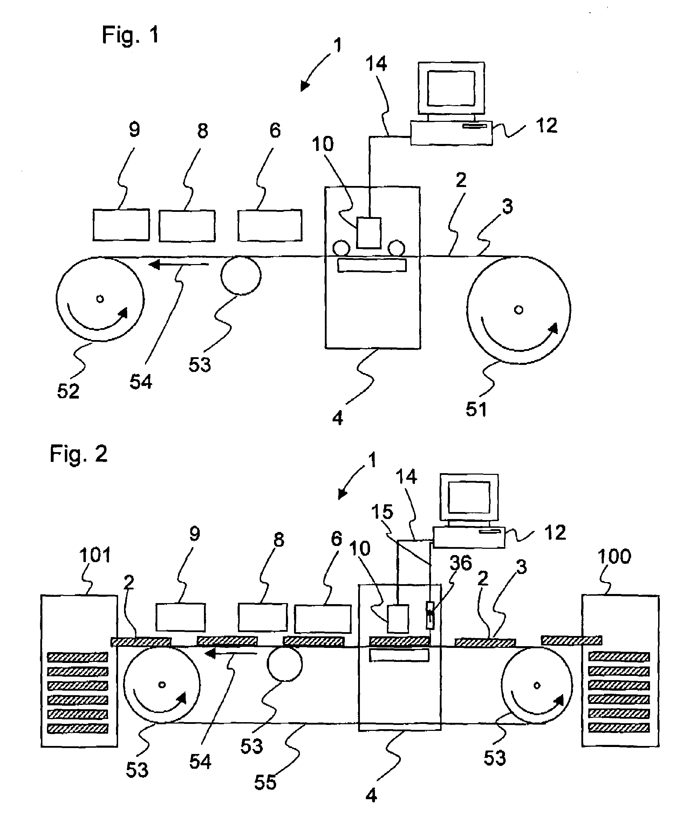

Fig. 1 zeigt eine schematische Ansicht einer ersten Ausführungsform einer erfindungsgemäßen Vorrichtung zum Auftragen von Beschichtungen, welche als Ganzes mit 1 bezeichnet ist. Die in Fig. 1 dargestellte Ausführungsform der Vorrichtung 1 dient zur Beschichtung einer bandförmigen Unterlage 2, welche auf einer Rolle 51 aufgewickelt ist. Die Unterlage 2 kann beispielsweise Papier, Karton, Textilien oder ein Folienmaterial umfassen, welches entsprechend aufwickelbar ist. Die Rolle 51 ist Bestandteil einer Transporteinrichtung, welche die Unterlage 2 durch die Vorrichtung 1 befördert. Die Unterlage wird nach der Beschichtung auf einer weitere Rolle 52, die ebenfalls Teil der Beförderungseinrichtung ist, aufgewickelt. Die Transporteinrichtung umfaßt ferner eine oder mehrere Walzen 53, die beispielsweise auch als vakuumförderwalzen ausgebildet sein können.

Die Unterlage 2 wird mittels der Transporteinrichtung 51, 52 und 53 entlang einer durch einen Pfeil symbolisierten ersten Richtung 54 durch eine Beschichtungseinheit 4 geführt. Die Beschichtungseinheit 4 umfaßt einen Dosierkopf 10, welcher Düsen zum Auftragen des Beschichtungsmaterials aufweist. Der Dosierkopf, beziehungsweise die Düsen des Dosierkopfs sind z.B. unter Ansprechen auf rechnergenerierte Signale steuerbar. Dazu ist der Dosierkopf 10 über eine geeignete Schnittstelle 14 mit einem Rechner 12 verbunden. Als Schnittstelle kann dabei beispielsweise eine Druckerschnittstelle verwendet werden. Vom Rechner werden entsprechende Steuersignale zum Ansteuern der Düsen des Dosierkopfes 10 erzeugt und an diesen über die Schnittstelle 10 übermittelt. Von den Düsen wird dann punktweise unter Ansprechen auf das Steuersignal Beschichtungsmaterial aufgetragen. Das Beschichtungsmaterial kann beispielsweise einen Lack umfassen, so daß mittels der erfindungsgemäßen Vorrichtung ganzflächige oder örtlich begrenzte Lackierungen auf der zu beschichtenden Oberfläche 3 der bandförmigen Unterlage aufgebracht werden können.

Die Beschichtungseinheit 4 kann außerdem eine Einrichtung zum Bewegen des Dosierkopfs entlang einer zweiten, zur ersten Richtung im wesentlichen senkrechten Richtung umfassen. Damit kann der Dosierkopf in Richtung senkrecht zur Papierebene verfahren und positioniert werden, so daß die gesamte Oberfläche der bandförmigen Unterlage 2 überstrichen werden kann.

Nach dem Verlassen der Beschichtungseinheit 4 wird die bandförmige Unterlage 2 an einer Trocknungseinheit 6 vorbeigeführt, welche durch Erwärmen der aufgetragenen Beschichtung, insbesondere mittels Heissluft oder Wärmestrahlung dem aufgetragenen Beschichtungsmaterial ein wenigstens teilweises Abdampfen von Lösungsmitteln bewirkt.

Diese Ausführungsform der Vorrichtung 1 weist außerdem noch eine Strahlenhärtungseinheit 8 auf, an welcher die beschichtete Unterlage 2 ebenfalls vorbeigeführt wird. Die Strahlenhärtungseinheit 8 strahlt z.B. ultraviolettes Licht oder Elektronenstrahlen auf die Beschichtung. Wurde die Unterlage 2 in der Beschichtungseinheit 4 beispielsweise mit einem UV-härtbaren Lack beschichtet, so wird der Lack während des Vorbeiführens an der Einheit 8 gehärtet. Der UV-härtbare Lack kann dabei beispielsweise auf der Basis von Acrylaten, Methacrylaten, Polyvinylether, Polyestern auf Maleinsäure- oder Fumarsäurebasis, Epoxidharzen, Styrolverbindungen, Siliconacrylaten oder Mischungen aus diesen hergestellt sein.

Durch die Kombination von Trocknung und Härtung wird eine feste Beschichtung erzeugt, die außerdem vor dem Aufwickeln der bandförmigen Unterlage 2 auf die Rolle 52 fertig ausgehärtet ist, so daß es auf der Rolle 52 nicht mehr zum Zusammenkleben einzelner Lagen kommt. Abschließend kann vor dem Aufrollen der Unterlage 2 auch noch eine Kühlung mittels einer Kühlungseinheit 9 vorgenommen werden.

Fig. 2 zeigt schematisch eine Ausführungsform einer erfindungsgemäßen Vorrichtung für die Beschichtung von Einzelsubstraten. Die Vorrichtung weist dazu eine Zuführungseinrichtung 100 für die Zufuhr von Unterlagen in Form einzelner Substrate auf. Die Substrate werden von der Zuführungseinrichtung 100 auf einem Transportband 55 abgelegt, welches mit Walzen 53 geführt und bewegt wird. Die Vorrichtung 1, insbesondere die Beschichtungseinheit 4 der Vorrichtung 1 kann zur Ermittlung der Position der Unterlagen 2 auf dem Transportband 55 eine Positionsermittlungseinrichtung 36 aufweisen. Beispielsweise kann die Positionsermittlungseinrichtung 36 die Lage der vorderen Kante der Einzelsubstrate mittels einer geeigneten Lichtschranke bestimmen. Die Positionsermittlungseinrichtung 36 kann mit einer Schnittstelle 15 am Rechner 12 angeschlossen sein, um Positionsdaten oder entsprechende Signale an den Rechner 12 übermitteln. Die Positionsdaten können dann von dem Programm zur Steuerung des Dosierkopfs 10 berücksichtigt werden, um eine exakte Ausrichtung der aufgetragenen, strukturierten Beschichtung zu erhalten.

Die Oberflächen der Unterlagen werden dann wie anhand von Fig. 1 beschrieben, behandelt. Die fertig beschichteten Unterlagen 2 werden nach Härtung und Trocknung von einer Entnahmeeinrichtung 101 für Einzelsubstrate vom Transportband abgenommen und gestapelt.
Die Vorschubgeschwindigkeit, die mit einer wie beispielsweise anhand der Fig. 1 oder 2 dargestellten Ausführungsform erreicht werden kann, hängt von der Ortsauflösung des Beschichtungsauftrags, der zu erzielenden Beschichtungsdicke, der Tropfenmenge und der Ansteuerfrequenz der Düsen des Dosierkopfes ab. Wird der Dosierkopf nicht quer zur ersten Richtung, verschoben, so wird beispielsweise die Auflösung durch den Düsenabstand bestimmt. Bei einer Auflösung von 100 dpi und einer Beschichtungsdicke von 5 µm, einer Tropfenmenge von 350 Picolitern und einer Ansteuerfrequenz von 5kHz kann beispielsweise eine Vorschubgeschwindigkeit von 100 Metern pro Minute erreicht werden. Selbstverständlich sind auch, abhängig von den oben genannten Parametern auch wesentlich höhere Verarbeitungsgeschwindigkeiten möglich. So können typischerweise Vorschubgeschwindigkeiten von 150 Meter pro Minute oder mehr erreicht werden.

Möglich ist es jedoch auch, beispielsweise bei entsprechender Erhöhung der Ansteuerfrequenz oder der Tropfenmenge oder durch Verwendung geeigneter Dosierköpfe, eine Vorschubgeschwindigkeit von 500 Metern pro Minute oder bis zu 2000 Metern pro Minute zu erreichen. Gemäß einer Ausführungsform der Erfindung werden Vorschubgeschwindigkeiten von 150 Metern pro Minute oder mehr erreicht. Bevorzugt kann insbesondere auch eine Vorschubgeschwindigkeiten von 300 Metern pro Minute oder mehr erreicht werden, so daß die anhand der Fig. 1 oder 2 beschriebenen Vorrichtungen beispielsweise auch Offset-Druckmaschinen umfassen können. Insbesondere kann die in Fig. 1 dargestellte Vorrichtung eine Rollenoffset-Druckmaschine umfassen, bei der Vorschubgeschwindigkeiten von 300 Metern pro Minute oder mehr üblich sind.

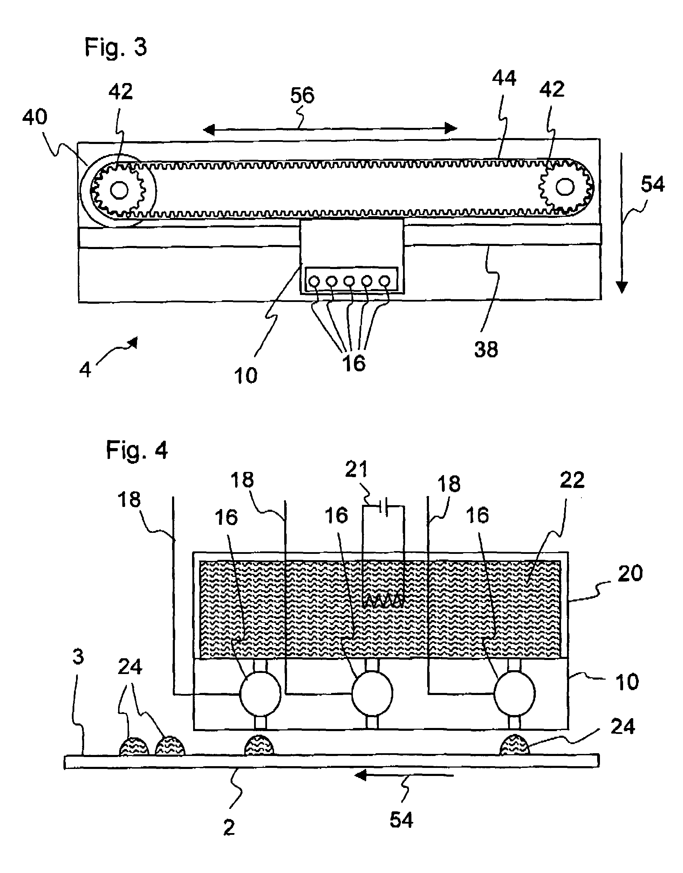

Fig. 3 zeigt eine schematische Aufsicht auf eine Ausführungsform einer Beschichtungseinheit 4. Die Beschichtungseinheit 4 kann beispielsweise als Modul in eine Beschichtungsanlage oder eine Druckmaschine integriert werden, so daß die zu beschichtenden Unterlagen entlang der ersten Richtung 54 an der Beschichtungseinheit 4 vorbeigeführt werden. Diese Ausführungsform der Beschichtungseinheit 4 weist einen Dosierkopf 10 auf, welcher entlang einer zur Richtung 54 im wesentlichen senkrechten Richtung 56 beweglich ist. Dazu wird der Dosierkopf 10 auf einer Führungsschiene 38 entlang der Richtung 56 beweglich gehaltert. Der Dosierkopf 10 ist außerdem an einem Zahnriemen 44 befestigt, welcher über Zahnräder 42 läuft. Eines der Zahnräder 42 ist mit einem Schrittmotor 40 verbunden, welcher dementsprechend über das Zahnrad 42 den Zahnriemen 44 antreibt und den Dosierkopf entlang der Führungsschiene 38 bewegt. Die Beschichtungseinheit 4 kann außerdem über eine Elektronik zur Steuerung des Dosierkopfs 10 und zum Antrieb des Schrittmotors aufweisen. Außerdem kann die Beschichtungseinheit 4, wie schematisch anhand der Figuren 1 und 2 gezeigt ist, eine Schnittstelle zur Verbindung mit einem Rechner zur Steuerung der Einheit 4 aufweisen.

Im folgenden wird Bezug auf Fig. 4 genommen, welche schematisch die Herstellung einer ortsaufgelöst strukturierten Beschichtung einer Oberfläche 3 einer zu beschichtenden Unterlage 2 zeigt. Die Unterlage 2 wird am Dosierkopf 10 entlang einer ersten Richtung 54 vorbeigeführt. Der Dosierkopf 10 weist ansteuerbare Düsen 16 auf, welche jeweils über Zuleitungen 18 mit der Schnittstelle verbunden sind. Die Verbindung kann direkt, oder über eine Schaltungsanordnung erfolgen. Die Düsen können beispielsweise Bubble-Jet-Düsen oder Ink-Jet- oder Piezo-Jet-Düsen sein. Dabei werden die über die Schnittstelle gesendeten Steuersignale in entsprechende Zuleitungssignale transformiert. Die Düsen 16 sind mit einem Reservoir 20 verbunden, in welchem sich das Beschichtungsmaterial 22 befindet. Die Vorrichtung kann außerdem eine Vorwärmeinrichtung 21 aufweisen, welche das im Reservoir 20 befindliche fluide Beschichtungsmaterial 22 vorwärmt, um beispielsweise dessen Viskosität zu erniedrigen.
Das fluide Beschichtungsmaterial wird dabei bevorzugt entweder so erwärmt, daß dessen Viskosität bei 8 bis 100 mPa·s, vorzugsweise 8 bis 50 mPa·s, besonders bevorzugt 8 bis 25 mPa·s liegt, oder die Zusammensetzung des Beschichtungsmaterials wird entsprechend gewählt, daß es eine solche Viskosität aufweist. Ebenso kann auch die Viskosität eines hochviskoses Beschichtungsmaterial durch Erwärmung und geeignete Zusätze verringert werden, um den Beschichtungsauftrag zu erleichtern.

Wird ein Zuleitungssignal über die Zuleitung an eine Düse gelegt, so wird z.B. bei einer Bubble-Jet-Düse ein Bereich der Düse erhitzt, so daß Beschichtungsmaterial, beziehungsweise Lösungsmittel des Beschichtungsmaterials verdampft und ein Tropfen 24 durch den Dampfdruck aus der Düse auf die zu beschichtende Oberfläche 3 der Unterlage 2 aufgetragen wird. Durch Bewegung der Unterlage in der Richtung 54, sowie den Zeitpunkt, zu dem ein Steuersignal, beziehungsweise ein Zuleitungssignal an die Düse gelegt wird, wird somit die Position eines Tropfens 24 aus Beschichtungsmaterial in der Richtung 54 entlang der Oberfläche 3 festgelegt. Durch Bewegung des Dosierkopfs 10 in einer zu Richtung 54 senkrechten Richtung wird die Position eines Tropfens auch in dieser Richtung bestimmt, so daß sich aus der Vielzahl aufgetragener Tropfen 24 ortsaufgelöst strukturierte Beschichtungen nach dem Dropon-Demand-Prinzip herstellen lassen. Die einzelnen Tropfen können nachfolgend abhängig von der Zusammensetzung des Beschichtungsmaterials beispielsweise durch UV-Härtung oder thermische Vernetzung verfestigt werden, um eine feste und dauerhafte Beschichtung zu erzeugen. Die Tropfen 24 können insbesondere so dicht nebeneinander gesetzt werden, daß sich aus den Tropfen ein geschlossener Film bildet.

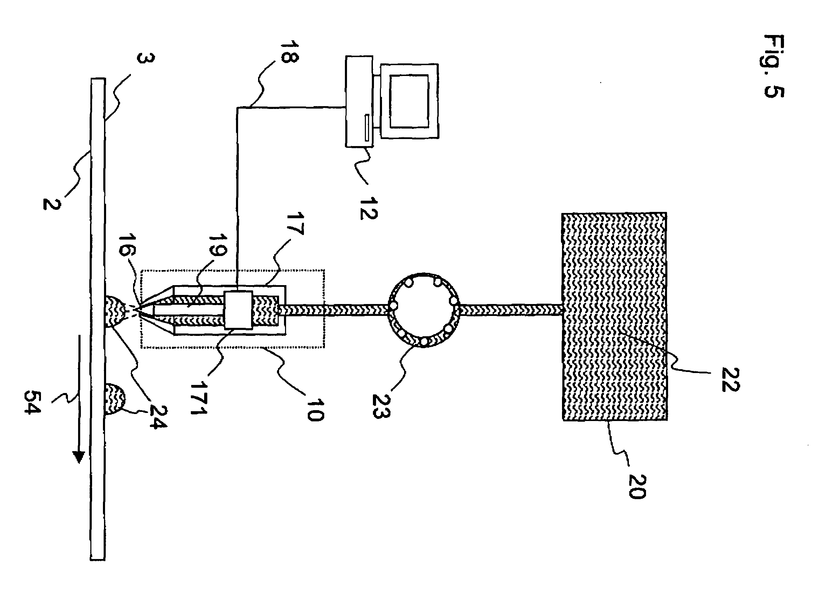

Fig. 5 zeigt Teile einer weiteren Ausführungsform einer erfindungsgemäßen Vorrichtung. Bei dieser Ausführungsform umfaßt der Dosierkopf 10 eine Düse 16, welche durch ein piezoelektrisches oder elektromagnetisch gesteuertes Ventil 17 betätigt wird. Das Ventil 17 umfaßt dazu einen elektromagnetischen oder piezoelektrischen Aktuator 171, der mit einer Düsennadel 19 verbunden ist und über eine Zuleitung 18 an einen Rechner 12 angeschlossen ist. Zwischen Rechner 12 und dem Ventil kann eine geeignete, nicht dargestellte Elektronik zwischengeschaltet sein, welche die vom Rechner 12 erzeugten Steuersignale umsetzt.

Das fluide Beschichtungsmaterial 22 wird aus einem Reservoir 20 durch eine Pumpeinrichtung 23 entnommen und der Düse unter Überdruck zugeführt. Als Pumpeinrichtung 23 ist beispielsweise eine Rollenzellenpumpe oder eine Flügelzellenpumpe geeignet, wie sie beispielsweise in Kraftstoff-Einspritzssystemen für Verbrennungsmotoren eingesetzt werden. Ebenso kann das Ventil 17 ein Einspritzventil für die Kraftstoffeinspritzung in Verbrennungsmotoren umfassen. Diese Komponenten zeichnen sich durch ihre hohe Langzeitstabilität aus und können mit großen Überdrücken arbeiten, beziehungsweise hohe Drücke erzeugen. Derartige Systeme eignen sich besonders für die Verarbeitung größerer Mengen von Beschichtungsmaterial und größere Beschichtungsdicken. Auch können Beschichtungsmaterialien mit hoher Viskosität leicht verarbeitet werden.

Neben einem Ventil mit Düsennadel wie in Fig. 5 dargestellt sind auch noch vielfältige andere Verschlußarten möglich. Beispielsweise kann das Ventil eine durch Steuersignale ansteuerbare oder betätigbare Klappe oder einen entsprechenden Schieber oder auch eine Einrichtung zum Abdrücken oder Abknicken eines Rohres oder Schlauches aufweisen, um den Beschichtungsauftrag zu steuern.

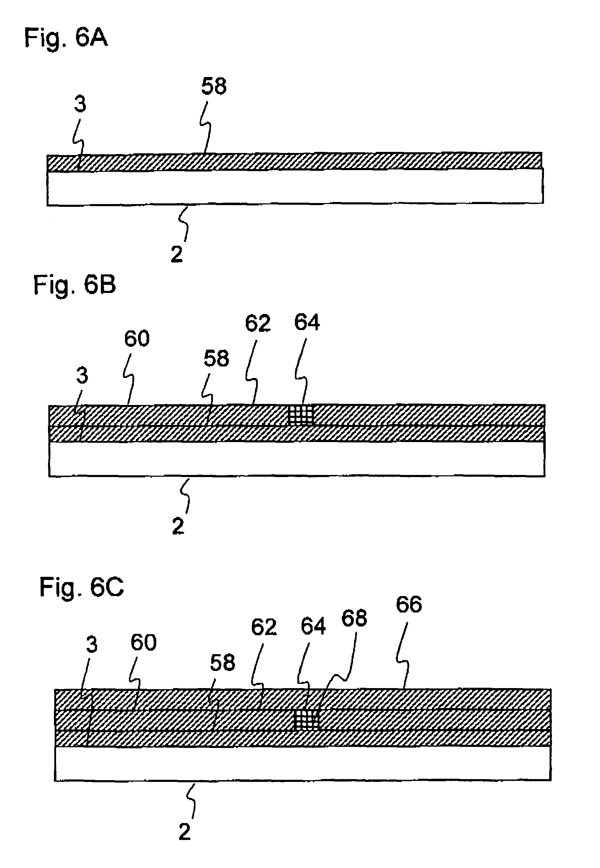

In den Figuren Fig. 6A bis 6C sind beispielhaft Verfahrensschritte zur Herstellung einer mehrlagigen Beschichtung mit Wellenleiterstruktur anhand schematischer Querschittansichten dargestellt. Auf die zu beschichtende Oberfläche 3 einer geeigneten Unterlage 2 wird, wie anhand von Fig. 6A gezeigt ist, zunächst eine erste Lage 58 aus einem ersten Material aufgetragen.

Fig. 6B zeigt die Unterlage 2 nach einem weiteren Beschichtungsvorgang, bei welchem eine zweite Schicht 62 auf die erste Schicht 60 aufgetragen ist. Die Schicht 62 weist Bereiche 62 aus einem ersten Material und einen Bereich 64 aus einem weiteren Material auf. Der Bereich 64 weist, um später einen Wellenleiter zu definieren, eine langgestreckte Struktur auf.

Zur Herstellung dieser zweiten Lage wurde das erfindungsgemäße Verfahren mittels Bewegen der Unterlage relativ zum Dosierkopf und/oder des Dosierkopfes relativ zur Unterlage und Auftragen eines fluiden Beschichtungsmaterials auf die Oberfläche durch eine oder mehrere Düsen des Dosierkopfes unter Ansprechen auf von einem Rechner erzeugte Steuersignale hergestellt. Dabei wurden die Bereiche 62 und 64, die unterschiedliche Beschichtungsmaterialien umfassen, durch Auftragens eines ersten Beschichtungsmaterials durch zumindest eine erste Düse und eines zweiten Beschichtungsmaterials durch zumindest eine zweite Düse des Dosierkopfs erzeugt.

Die so hergestellte Beschichtung wird abschließend, wie anhand von Fig. 6C gezeigt ist, mit einer dritten Lage 66 abgedeckt. Die für die mehrlagige Beschichtung verwendeten Beschichtungsmaterialien sind dabei so gewählt, daß das Beschichtungsmaterial des Bereichs 64 gegenüber den angrenzenden Bereichen einen anderen Brechungsindex aufweist. Damit durch den Bereich 64 eine Wellenleiterstruktur 68 definiert wird, weist dieser Bereich vorzugsweise einen niedrigeren Brechungsindex verglichen mit den Beschichtungsmaterialien der ersten und dritten Lage, sowie der Bereiche 62 auf. Selbstverständlich können durch derartiges Auftragen mittels rechnergesteuerter Düsen auch andere Strukturen, insbesondere auch andere optische Komponenten, wie beispielsweise optische Gitter in der Beschichtung integriert werden. Selbstverständlich ist es auch möglich, Bereiche unterschiedlicher Brechungsindicees zu erreichen, indem eine oder mehrere Komponenten eines Mehrkomponentensystems lokal variiert werden.

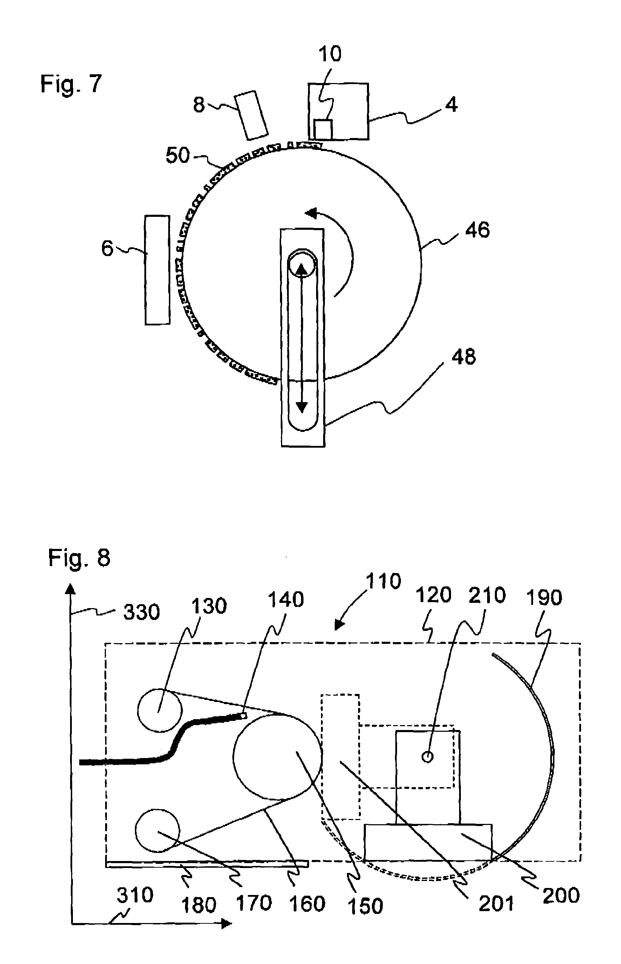

In Fig. 7 ist eine weitere Anwendung der Erfindung dargestellt. Fig. 7 zeigt schematisch eine Vorrichtung zur Herstellung von Druckformen. Diese Vorrichtung kann insbesondere direkt in Druckmaschinen integriert werden, wodurch das aufwendige Herstellen und Wechseln der Druckformen entfallen kann. Die Vorrichtung ist beispielhaft für die Bebilderung eines Druckzylinders 46 dargestellt. In diesem Fall stellt der Druckzylinder die zu beschichtende Unterlage und dessen Mantelfläche die zu beschichtende Oberfläche der Unterlage dar. Zum Auftrag einer flächenhaften Beschichtung wird dabei der Druckzylinder während des Beschichtungsprozesses rotiert.

Die Vorrichtung weist, ähnlich wie die oben erläuterten Ausführungsformen eine Beschichtungseinheit 4 auf. Mit der Beschichtungseinheit 4 wird auf die Mantelfläche des Druckzylinders eine Beschichtung 50 aufgetragen, die so strukturiert wird, daß sie die vorgesehene Bebilderung der Druckform aufweist. Die Strukturierung kann dabei derart sein, daß die Druckfarbe auf erhabenen Bereichen der Beschichtung, oder in Vertiefungen in der Beschichtung 50 haftet.

Zusätzlich kann die Vorrichtung noch eine UV-Härtungseinheit 8 bei Verwendung strahlenhärtbarer Beschichtungsmaterialien und/oder eine Trocknungseinheit 6 aufweisen. Wird die Vorrichtung in eine Druckmaschine integriert, so kann der Druckzylinder beispielsweise mit einer Hebevorrichtung zum Beschichten von einer Druckposition in eine Beschichtungsposition gefahren werden, in welcher der Zylinder 46 berührungsfrei drehen kann. Neben dem Bebildern in der Maschine besteht weiterhin die Möglichkeit ausserhalb der Maschine Druckformen, vorzugsweise Hülsen zu bebildern und diese nach der Strukturierung in die Maschine einzubauen, was den Prozess der Bebilderung zeitlich unabhängig vom Druckprozess macht. Diese Möglichkeit kann bevorzugt sowohl im Offset- als auch im Flexodruck eingesetzt werden, ist jedoch nicht auf diese beiden Verfahren beschränkt.

Fig. 8 zeigt schematisch ein Ausführungsbeispiel einer Beschichtungseinrichtung 110. Dieses Ausführungsbeispiel bezieht sich auf eine Anlage, auf der Substrate entlang einer ersten Richtung 310 unter der Beschichtungseinrichtung 110 hindurchtransportiert werden. Die Substrate werden durch die Beschichtungseinrichtung 110 beschichtet.

Die Richtung 330 verläuft senkrecht zu der Ebene planarer Substrate. Die Ebene, in der sich planare Substrate befinden, wird dementsprechend definiert durch die erste Richtung 310 und eine zweite Richtung 320, die senkrecht zu den Richtungen 310 und 330 und damit senkrecht zur Bildebene der Fig. 8 verläuft. Für nicht planare Substrate, beispielsweise zylindrische Substrate, wie zum Beispiel Rohre, ist die Beschichtungseinheit der Kontur der Substrate angepasst, beispielsweise durch eine ringförmige Anordnung.

Die Beschichtungseinrichtung 110 besteht aus einer Beschichtungseinheit 200, einer Reinigungseinheit und den elektrischen und elektronischen Steuerkomponenten nebst Medienversorgung und Medienaufbereitung. Die Beschichtungseinrichtung 110 ist in ein staubdichtes Gehäuse 120 eingefasst, in dessen Inneren die Reinigungseinheit untergebracht ist. Im Beschichtungsbetrieb ist lediglich die Beschichtungseinheit 200 nach aussen gewandt, um Kontamination des Inneren mit Staub, beispielsweise Papierstäube oder Druckpuder, zu vermeiden. Dies ist bei Verwendung kleiner Düsen von besonderer Wichtigkeit, um die Verschmutzung oder das Verstopfen der Düsen zu verhindern.

Für den Reinigungsvorgang kann die Beschichtungseinheit 200 um eine Achse 210 rotiert werden, so dass sie von der Reinigungseinheit gereinigt werden kann. Eine Dichtung 190 sorgt dafür, dass während des Reinigungsvorgangs das Gehäuse 120 komplett nach aussen staubdicht verschlossen ist. Für eine nach unten gerichtete Beschichtung ist es von Vorteil gegenüber der Beschichtungseinheit 200 eine Auffangwanne zu positionieren, die Beschichtungsmaterial auffängt, welches zum Beispiel beim Konditionieren der Düsen freigesetzt wird. Ein Schutzblech 180 dient als Schutz vor Substraten, die nicht korrekt in der Anlage geführt werden und die Beschichtungseinheit 200 beschädigen könnten.

Die Reinigungseinheit kann beispielsweise aus einer Vorratsrolle 130 für fusselfreies Reinigungstuch 160, einer oder mehrerer Reinigungswalzen 150, die das Reinigungstuch 160 gleichmässig an die Dosierköpfe 250 andrücken, einer Aufwickeleinrichtung 170 für verbrauchtes Reinigungstuch 160 und einer Düse 140 für das gezielte Dosieren von Reinigungsflüssigkeit bestehen.

Die Medienversorgung der Beschichtungseinheit 200 besteht aus elektrischen und/oder elektronischen Steuereinheiten, aus einer Versorgung für das oder die Beschichtungsmedien und gegebenenfalls aus Druckluft- beziehungsweise Vakuumanschlüssen. Falls Schutz- oder Prozessgase nötig sind, werden diese ebenfalls zugeführt. Für die Beschichtung mit feinen Beschichtungsdüsen muss das Beschichtungsmedium vor der Zuführung in die Beschichtungseinheit zumindest noch filtriert werden, um die Kontamination mit Partikeln zu vermeiden. Im Falle der Verwendung von Piezo-Inkjetdüsen ist das Entgasen des Beschichtungsmediums von Vorteil, um hohe Ansteuerfrequenzen der Beschichtungsdüsen bis etwa 50 kHz zu ermöglichen.

Eine Beschichtungseinheit 200 besteht aus mehreren Dosierköpfen 250. Ein Dosierkopf 250 besteht aus mindestens zwei Düsen 260. Die Düsen 260 sind linear angeordnet. Zur Erreichung der gewünschten Auflösung von Düsen pro Längeneinheit entlang der Richtung 320 können die Dosierköpfe 250 verschieden angeordnet sein, beispielsweise in einer linearen Anordnung, einer gestaffelten Anordnung, einer Fischgrätenstruktur oder Kombinationen aus diesen.

Beispiele für mögliche Anordnungen von Dosierköpfen 250 sind in den Figuren 10A bis 10D dargestellt. Mit verschiedenen Anordnungen der Dosierköpfe 250 und damit der darauf linear mit konstantem Abstand vorgesehenen Düsen 260 können unterschiedliche Auflösungen von Düsen pro Längeneinheit entlang der Richtung 320 erreicht werden. Die Richtung 320 ist dabei senkrecht zur Substratlaufrichtung 310. Zur Veranschaulichung der Auflösung sind in den Figuren jeweils Hilfslinien 270 in Substratlaufrichtung 310 dargestellt.

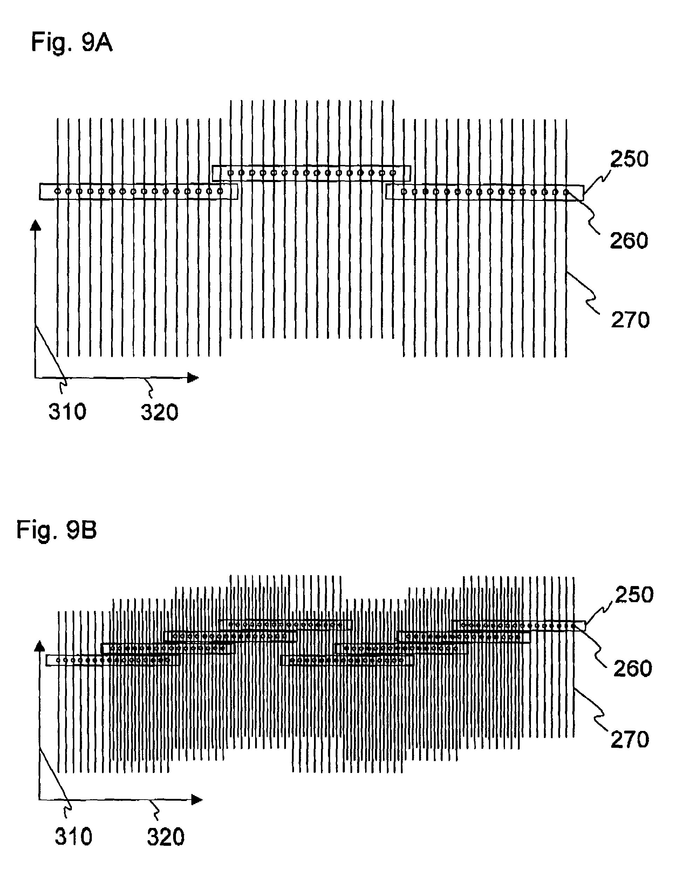

Fig. 9A zeigt schematisch eine einfache lineare Anordnung der Dosierköpfe 250. In diesem Beispiel ist die Auflösung der Anordnung von Düsen pro Längeneinheit entlang der Richtung 320 gegeben durch die Auflösung eines einzelnen Dosierkopfes 250.

Fig. 9B zeigt schematisch eine lineare, gestaffelte Anordnung. Bei dieser Anordnung werden die auf den einzelnen Dosierköpfen 250 linear angeordneten Einheiten von Düsen 260 so versetzt hintereinander angeordnet, dass sich die Auflösung erhöht.

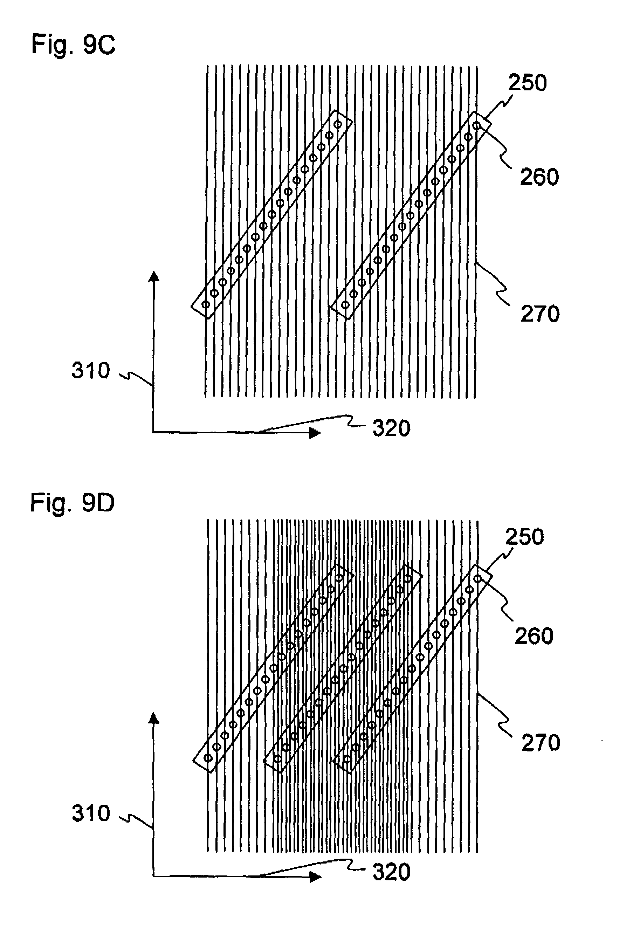

Fig. 9C zeigt schematisch eine Anordnung mit Fischgrätenstruktur. Die Fischgrätenstruktur bezeichnet eine Anordnung der Dosierköpfe 250 bei der die Achse, auf der die mindestens zwei Düsen 260 des Dosierkopfes 250 angeordnet sind, gegenüber der Richtung 320 innerhalb der durch die Richtungen 310 und 320 definierten Ebene um einen Winkel zwischen 0° und 90° gedreht ist, wodurch die Düsen entlang der Richtung 320 näher zusammenrücken. Winkel und Abstand können so gewählt werden, dass sich bei mehr als zwei Düsen die Düsen zweier benachbarter Köpfe überschneiden wobei eine Kombination aus Fischgräten- und gestaffelter Anordnung entsteht. Dies ist in Fig. 9D dargestellt.

Der Vorteil der Fischgrätenstruktur besteht in der Möglichkeit, die Köpfe platzsparend anzuordnen und die mechanische Ausrichtung benachbarter Köpfe zu erleichtern. Weiterhin können die beiden Verfahren auch kombiniert werden. Zur Erreichung höherer Schichtdicken können auch mehrere solcher Beschichtungseinheiten hintereinander in Richtung 310 angeordnet sein, selbstverständlich können hierfür auch mehrere Beschichtungseinrichtungen verwendet werden.

Die Kombination aus Dosierköpfen 250 in Fischgrätenanordnung und der oben beschriebenen Reinigungseinheit besitzt den zusätzlichen Vorteil, dass die Bewegungsrichtung des Reinigungstuchs nicht parallel oder senkrecht zur Achse, an der die Düsen 260 ausgerichtet sind, oder Düsenachse, erfolgt.
Es ist auch eine vereinfachte Lösung zur Reinigung einer Beschichtungseinheit 200 möglich, bei der ein Wischer, der mit Tuch bespannt ist, über die Düsenfläche der Beschichtungseinheit 200 fährt, wobei darauf zu achten ist, dass nicht senkrecht oder parallel zur Düsenachse gewischt wird.

Die oben beschriebene Beschichtungseinrichtung 110 kann zum Beispiel in einer Beschichtungsmaschine für die Lackierung von Druckbögen (Lackiermaschine) zum Beispiel anstelle eines konventionellen Walzenlackierwerkes eingesetzt werden. Hierbei wird entweder vollflächig lackiert oder es müssen zusätzlich Lagesensoren angebracht werden, um die Position und den Winkel des Bogens vor der Beschichtung zu erfassen, damit die Beschichtung passergenau erfolgen kann. Eine weitere Möglichkeit besteht in einer leichten Modifikation einer konventionellen Walzenlackiermaschine, bei der der Bogen vor dem Passieren der Beschichtungseinrichtung 110 so ausgerichtet wird, dass die Vorderkante parallel zur Beschichtungseinrichtung 110 ist. Anschliessend sollte allerdings der Bogen zum Beispiel durch Vakuum auf der Transporteinrichtung fixiert werden, damit sich der Bogen nicht mehr drehen kann. Auf diese Weise muss das Beschichtungsmuster lediglich seitlich passergenau ausgerichtet aber nicht gedreht werden. Der Vorteil liegt in einem wesentlich geringeren Rechenaufwand zur Ausrichtung des Beschichtungsmusters.
Weiterhin kann die Einrichtung auch statt eines Lackierwerkes in einer Offset-Druckmaschine zum Einsatz kommen. Hier kann vollständig auf eine Positonierung des Substrates verzichtet werden, da die Bögen in der Maschine bereits ausgerichtet werden. Diesen Vorteil kann man sich auch beim Einbau der Einrichtung in eine Siebdruckmaschine zunutze machen.
Die vorgenannten Beispiele sind aus dem grafischen Bereich. Es lassen sich noch viele weitere Einsatzgebiete nennen, wie beispielsweise der Einsatz der Einrichtung zum dekorativen oder vollständigen Lackieren von Möbeln/Möbelteilen oder anderen Gegenständen, die lackiert werden sollen.

### Bezugszeichenliste

| | |
|---|---|
| 1 | Vorrichtung zum Auftragen von Beschichtungen |
| 2 | Unterlage |
| 3 | zu beschichtende Oberfläche der Unterlage 2 |
| 4 | Beschichtungseinheit |
| 5 | Transporteinrichtung |
| 6 | Trocknungseinheit |
| 8 | UV-Härtungseinheit |
| 9 | Kühlungseinheit |
| 10 | Dosierkopf |
| 12 | Rechner |
| 14, 15 | Schnittstelle |
| 16 | Düse |
| 17 | Ventil |
| 171 | elektromagnetischer/piezoelektrischer Aktuator |
| 18 | Zuleitungen zu Düsen 16 |
| 19 | Ventilnadel |
| 20 | Reservoir |
| 21 | Vorwärmeinrichtung |
| 22 | Beschichtungsmaterial |
| 23 | Pumpeinrichtung |
| 24 | Tropfen |
| 26 | ausgehärtete Beschichtung |
| 36 | Positionsermittlungs-Einrichtung |
| 38 | Führungsschiene |
| 40 | Schrittmotor |
| 42 | Zahnrad |
| 44 | Zahnriemen |
| 46 | Druckzylinder |
| 48 | Hebevorrichtung |
| 50 | Strukturierte Beschichtung |
| 51, 52 | Rollen |
| 53 | Walzen |
| 54 | erste Richtung |
| 55 | Transportband |
| 56 | zweite, zu Richtung 54 im wesentlichen senkrechte Richtung |
| 58 | erste Lage einer mehrlagigen Beschichtung |
| 60 | zweite Lage einer mehrlagigen Beschichtung |
| 62 | erster Bereich |
| 64 | zweiter Bereich |
| 66 | dritte Lage einer mehrlagigen Beschichtung |
| 100 | Zuführungseinrichtung für Einzelsubstrate |
| 101 | Entnahmeeinrichtung für Einzelsubstrate |
| 110 | Beschichtungseinrichtung |
| 120 | Staubdichtes Gehäuse |
| 130 | Vorratsrolle für Reinigungstuch |
| 140 | Düse für Reinigungsflüssigkeit |
| 150 | Reinigungswalze |
| 160 | Reinigungstuch |
| 170 | Aufwickelvorrichtung |
| 180 | Schutzblech als Sicherheitsabstandshalter |
| 190 | Dichtung zum Verschließen der Beschichtungseinheit während des Reinigungsvorganges |
| 200 | Beschichtungseinheit in Beschichtungsposition |
| 201 | Beschichtungseinheit in Reinigungsposition |
| 210 | Drehachse |
| 250 | Dosierkopf |
| 260 | Düse |
| 270 | Hilfslinien zur Veranschaulichung des Düsenabstandes entlang der Richtung 320 |
| 310 | eine erste Richtung |
| 320 | eine zweite, zu Richtung 310 im wesentlichen senkrechte, Richtung |
| 330 | eine dritte, zu den Richtungen 310 und 320 im wesentlichen senkrechte, Richtung |

## Patentansprüche

1. Verfahren zum Auftragen von strukturierten erhabenen Beschichtungen auf Oberflächen in einer Druck- oder Lackieranlage mit einer Vorrichtung (1), die zumindest einen Dosierkopf (10) umfaßt, welcher zumindest eine durch ein Steuersignal ansteuerbare Düse (16) aufweist, **gekennzeichnet durch** die Schritte:
- Bewegen einer Unterlage (2) mit einer zu beschichtenden Oberfläche (3) entlang dieser Oberfläche (3) relativ zum Dosierkopf (10) und/oder Bewegen des Dosierkopfs (10) relativ zu einer zu beschichtenden Oberfläche (3) einer Unterlage (2), und
- strukturiertes Beschichten mit erhabenen Strukturen durch Auftragen eines transparenten fluiden Beschichtungsmaterials (22) auf die Oberfläche **durch** die Düse (16) unter Ansprechen auf zumindest ein von einem Rechner (12) erzeugtes Steuersignal,
- Verfestigen des Beschichtungsmaterials (22) auf der Oberfläche mit einer Verfestigungseinrichtung.

2. Verfahren gemäß Anspruch 1, **dadurch gekennzeichnet, daß** die Vorrichtung (1) in eine bestehende Druck- oder Lackieranlage integriert wird.

3. Verfahren nach Anspruch 1 oder 2, **dadurch gekennzeichnet, daß** der Schritt des Auftragens eines fluiden Beschichtungsmaterials auf die Oberfläche den Schritt des Auftragens eines fluiden Beschichtungsmaterials durch eine Bubble-Jet-Düse und/oder eine Ink-Jet- oder Piezo-Jet-Düse umfaßt.

4. Verfahren nach einem der Ansprüche 1 bis 3, **dadurch gekennzeichnet, daß** der Schritt des Auftragens eines fluiden Beschichtungsmaterials den Schritt des Öffnens eines Ventils (17), insbesondere eines Piezoventils oder eines elektromagnetisch gesteuerten Ventils umfaßt.

5. Verfahren nach einem der Ansprüche 1 bis 4, **dadurch gekennzeichnet, daß** der Schritt des Auftragens eines fluiden Beschichtungsmaterials den Schritt des Auftragens eines fluiden Beschichtungsmaterials, welches einen thermoplastischen Kunststoff aufweist, umfaßt.

6. Verfahren nach Anspruch 5, **dadurch gekennzeichnet, daß** der thermoplastische Kunststoff einen Kunststoff aus einer Gruppe aufweist, die Polyethylen, Polypropylen, Polyacrylat, Polymethacrylat, Polyacrylnitril, Polybutadien, Polyamid, Polyester, Polyether, Polyetherketone, Polyvinylacetate, Polyacetale, Polyvinylacetate, Polyolefine, Polycarbonat, Polyether-Block-Amide, PSU, PES, PPS, PVC, PVDC, PET, PS, PTFE, PVDF, PF, Polyimide, Polyimid-Derivate, Cellulosederivate und Copolymerisate umfaßt.

7. Verfahren nach einem der Ansprüche 1 bis 6, **dadurch gekennzeichnet, daß** der Schritt des Auftragens eines fluiden Beschichtungsmaterials den Schritt des Auftragens eines Beschichtungsmaterials umfaßt, welches einen gelösten Kunststoff aufweist.

8. Verfahren nach einem der Ansprüche 1 bis 7, **dadurch gekennzeichnet, daß** der Schritt des Auftragens eines fluiden Beschichtungsmaterials den Schritt des Auftragens eines Beschichtungsmaterials umfaßt, welches wenigstens eine Komponente eines chemischen Reaktivsystems aufweist.

9. Verfahren nach Anspruch 8, **dadurch gekennzeichnet, daß** das chemische Reakivsystem ein isocyanatvernetzendes System und/oder ein Polyurethan und/oder ein Epoxidsystem und/oder ein Silikon und/oder ein Derivat eines dieser Systeme umfaßt.

10. Verfahren nach einem der Ansprüche 1 bis 9, **dadurch gekennzeichnet, daß** der Schritt des Auftragens eines fluiden Beschichtungsmaterials den Schritt des Auftragens eines Beschichtungsmaterials umfaßt, welches wenigstens eine Komponente eines thermisch vernetzbaren Systems aufweist.

11. Verfahren nach Anspruch 10, **dadurch gekennzeichnet, daß** das thermisch vernetzbare System ein Polyester-Melamin und/oder ein Harnstoff-Harz und/oder ein Epoxidsystem und/oder ein Polyesthersystem umfaßt.

12. Verfahren nach einem der Ansprüche 1 bis 11, **dadurch gekennzeichnet, daß** der Schritt des Auftragens eines fluiden Beschichtungsmaterials den Schritt des Auftragens eines Beschichtungsmaterials umfaßt, welches wenigstens eine Komponente eines strahlenhärtbaren Systems aufweist.

13. Verfahren nach Anspruch 12, **dadurch gekennzeichnet, daß** das strahlenhärtbare System ein Acrylat und/oder ein Methacrylat und/oder ein Polyvinylether und/oder ein Polyester und/oder eine Maleinsäureverbindung und/oder eine Fumarsäureverbindung und/oder ein Epoxid und/oder eine Styrolverbindung und/oder ein Siliconacrylat umfaßt.

14. Verfahren nach einem der vorstehenden Ansprüche, **dadurch gekennzeichnet, daß** der Schritt des Verfestigens des fluiden Beschichtungsmaterials auf der Oberfläche den Schritt des Trocknens des Beschichtungsmaterials umfaßt.

15. Verfahren nach einem der vorstehenden Ansprüche, **dadurch gekennzeichnet, daß** der Schritt des Verfestigens des fluiden Beschichtungsmaterials auf der Oberfläche den Schritt des UV-Härtene des Beschichtungsmaterials umfaßt.

16. Verfahren nach einem der vorstehdenden Ansprüche, **dadurch gekennzeichnet, daß** der Schritt des Verfestigens des fluiden Beschichtungsmaterials auf der Oberfläche den Schritt des Polymerisierens des Beschichtungsmaterials, umfaßt.

17. Verfahren nach einem der vorstehenden Ansprüche, **dadurch gekennzeichnet, daß** der Schritt des Verfestigens des fluiden Beschichtungsmaterials auf der Oberfläche den Schritt des Vernetzens, insbesondere des thermischen Vernetzens umfaßt.

18. Verfahren nach einem der Ansprüche 1 bis 17, **dadurch gekennzeichnet, daß** der Schritt des Verfestigens des fluiden Beschichtungsmaterials auf der Oberfläche den Schritt des Reagierens des Beschichtungsmaterials mit einer Vorbeschichtung und/oder einer Nachbeschichtung auf der Oberfläche (3) umfaßt.

19. Verfahren nach einem der Ansprüche 1 bis 18, wobei der Dosierkopf zumindest eine erste Düse und zumindest eine zweite Düse aufweist, **dadurch gekennzeichnet, daß** der Schritt des Auftragens eines fluiden Beschichtungsmaterials auf die Oberfläche durch die Düse (16) unter Ansprechen auf ein von einem Rechner (12) erzeugtes Steuersignal den Schritt des Auftragens eines ersten Beschichtungsmaterials durch die zumindest eine erste Düse und eines zweiten Beschichtungsmaterials durch die zumindest eine zweite Düse umfaßt.

20. Verfahren nach einem der Ansprüche 1 bis 19, **dadurch gekennzeichnet, daß** der Schritt des Bewegens einer Unterlage (2) mit einer zu beschichtenden Oberfläche (3) entlang dieser Oberfläche (3) relativ zum Dosierkopf (10) und/oder Bewegen des Dosierkopfs (10) relativ zu einer zu beschichtenden Oberfläche (3) einer Unterlage (2) den Schritt des Vorschiebens der Unterlage (2) in einer ersten Richtung (54) umfaßt.

21. Verfahren gemäß Anspruch 20, **dadurch gekennzeichnet, daß** die Unterlage (2) relativ zum Dosierkopf (10) entlang der ersten Richtung mit einer Geschwindigkeit bis zu 2000 Metern pro Minute, bevorzugt mit einer Geschwindigkeit bis zu 500 Metern pro Minute, vorzugsweise mit einer Geschwindigkeit von 150 Metern pro Minute oder mehr und besonders bevorzugt mit einer Geschwindigkeit von 300 Metern pro Minute oder mehr bewegt wird.

22. Verfahren nach Anspruch 20 oder 21, **dadurch gekennzeichnet, daß** der Schritt des Bewegens einer Unterlage (2) mit einer zu beschichtenden Oberfläche (3) entlang dieser Oberfläche (3) relativ zum Dosierkopf (10) und/oder Bewegens des Dosierkopfs (10) relativ zu einer zu beschichtenden Oberfläche (3) einer Unterlage (2)den Schritt des Bewegens des Dosierkopfes entlang einer zweiten, zur ersten Richtung quer verlaufenden, vorzugsweise im wesentlichen senkrechten Richtung (56) umfaßt.

23. Verfahren gemäß einem der Ansprüche 1 bis 22, **dadurch gekennzeichnet, daß** das fluide Beschichtungsmaterial (22) vorerwärmt wird.

24. Verfahren nach Anspruch 23, **dadurch gekennzeichnet, daß** das fluide Beschichtungsmaterial auf bis zu 300 °C, vorzugsweise auf bis zu 125 °C, besonders bevorzugt auf bis zu 80 °C vorerwärmt wird.

25. Verfahren gemäß einem der Ansprüche 1 bis 24, **dadurch** gekenzeichnet, daß das fluide Beschichtungsmaterial mit einer Viskosität von 8 bis 100 mPa·s, vorzugsweise 8 bis 50 mPa·s und besonders bevorzugt 8 bis 25 mPa·s aufgetragen wird.

26. Verfahren nach einem der Ansprüche 1 bis 25, **dadurch gekennzeichnet, daß** das fluide Beschichtungsmaterial (22) bei Raumtemperatur eine Viskosität in einem Bereich von 50 mPa·s bis 10 mPa·s, bevorzugt von 50 mPa·s bis zu 1 Pa·s, besonders bevorzugt von 50 mPa·s bis zu 250 mPa·s beträgt.

27. Verfahren nach einem der Ansprüche 1 bis 26, **dadurch gekennzeichnet, daß** das fluide Beschichtungsmaterial (22) der Düse unter Überdruck zugeführt wird.

28. Verfahren nach einem der Ansprüche 1 bis 27, **dadurch gekennzeichnet, daß** die zu beschichtende Unterlage (2) auf einer Rolle (51) aufgewickelt ist und der Schritt des Bewegens einer Unterlage (2) mit einer zu beschichtenden Oberfläche (3) entlang dieser Oberfläche (3) relativ zum Dosierkopf (10) und/oder Bewegens des Dosierkopfs (10) relativ zu einer zu beschichtenden Oberfläche (3) einer Unterlage (2) den Schritt des Abwickelns der Unterlage (2) von der Rolle (51) umfaßt.

29. Verfahren nach einem der Ansprüche 1 bis 28, **dadurch gekennzeichnet, daß** der Schritt des Bewegens einer Unterlage (2) mit einer zu beschichtenden Oberfläche (3) entlang dieser Oberfläche (3) relativ zum Dosierkopf (10) und/oder Bewegens des Dosierkopfs (10) relativ zu einer zu beschichtenden Oberfläche (3) einer Unterlage (2) den Schritt des Aufwickelns der Unterlage (2) auf eine Rolle (52) umfaßt.

30. Verfahren nach einem der Ansprüche 1 bis 29, **gekennzeichnet durch** den Schritt des Ausrichtens der Unterlage (2) relativ zum Dosierkopf (10).

31. Verfahren nach einem der Ansprüche 1 bis 30, **dadurch gekennzeichnet, daß** der Schritt des Auftragens eines fluiden Beschichtungsmaterials auf die Oberfläche (3) durch die Düse (16) unter Ansprechen auf ein von einem Rechner (12) erzeugtes Steuersignal den Schritt des Auftragens von Beschichtungsmaterial auf zumindest einen Bereich (64) umfaßt, welches einen gegenüber angrenzenden Bereichen (62) anderen Brechungsindex aufweist.

32. Verfahren nach Anspruch 31, **dadurch gekennzeichnet, daß** der zumindest eine Bereich ein optisches Element, insbesondere einen Wellenleiter (68) definiert.

33. Verfahren nach einem der Ansprüche 1 bis 32, **dadurch gekennzeichnet, daß** der Schritt des Auftragens eines fluiden Beschichtungsmaterials auf die Oberfläche (3) durch die Düse unter Ansprechen auf ein von einem Rechner (12) erzeugtes Steuersignal den Schritt des Bebilderns einer Druckform (46) umfaßt.

34. Verfahren nach einem der Ansprüche 1 bis 33, **dadurch gekennzeichnet, daß** die Schritte des
- Bewegens einer Unterlage (2) mit einer zu beschichtenden Oberfläche (3) entlang dieser Oberfläche (3) relativ zum Dosierkopf (10) und/oder Bewegens des Dosierkopfs (10) relativ zu einer zu beschichtenden Oberfläche (3) einer Unterlage (2), und des
- Auftragens eines fluiden Beschichtungsmaterials auf die Oberfläche durch die Düse unter Ansprechen auf ein von einem Rechner (12) erzeugtes Steuersignal mehrfach durchgeführt werden.

35. Druck- oder Lackieranlage mit einer integrierten Vorrichtung (1) zum strukturierten Auftragen von transparenten erhabenen Beschichtungen, insbesondere gemäß eines Verfahrens nach einem der Ansprüche 1 bis 35, umfassend wenigstens eine Beschichtungseinheit (4), die zumindest einen Dosierkopf (10) umfaßt, welcher zumindest eine Düse (16) aufweist, welche unter Ansprechen auf ein rechnergeneriertes Steuersignal steuerbar ist, und
eine Einrichtung (5) zum Bewegen einer Unterlage (2) mit einer zu beschichtenden Oberfläche (3) entlang dieser Oberfläche (3) relativ zum Dosierkopf (10) und/oder zum Bewegen des Dosierkopfs (10) relativ zu einer zu beschichtenden Oberfläche (3) einer Unterlage (2) so daß durch die rechnergestützte Ansteuerung der mindestens einen Düse in Verbindung mit der Bewegung der Unterlage entlang der Oberfläche relativ zum Dosierkopf das punktgenaue, strukturierte Beschichten der Oberfläche mit einer Beschichtung mit erhabenen Strukturen ermöglicht wird, sowie eine Einrichtung zum Verfestigen des fluiden Beschichtungsmaterials auf der Oberfläche der Unterlage.

36. Druck- oder Lackieranlage nach Anspruch 35, **dadurch gekennzeichnet, daß** der Dosierkopf (10) so angeordnet ist, daß die zumindest eine Düse die zu beschichtende Unterlage (2) nicht berührt.

37. Druck- oder Lackieranlage nach Anspruch 35 oder 36, **dadurch gekennzeichnet, daß** die Einrichtung (5) zum Bewegen einer Unterlage (2) mit einer zu beschichtenden Oberfläche (3) entlang dieser Oberfläche (3) relativ zum Dosierkopf (10) und/oder zum Bewegen des Dosierkopfs (10) relativ zu einer zu beschichtenden Oberfläche (3) einer Unterlage (2) eine Transporteinrichtung (53, 55) zum Transport der Unterlage (2) entlang einer ersten Richtung (54) umfaßt.

38. Druck- oder Lackieranlage nach Anspruch 37, **dadurch gekennzeichnet, daß** die Beschichtungseinheit (4) eine Einrichtung (38, 40, 42, 44) zum Bewegen des Dosierkopfs (10) entlang einer zweiten, zur ersten Richtung (54) im wesentlichen senkrechten Richtung (56) umfaßt.

39. Druck- oder Lackieranlage nach einem der Ansprüche 35 bis 38, **dadurch gekennzeichnet, daß** die zumindest eine Düse (16) eine Bubble-Jet-Düse und/oder eine Ink-Jet- oder Piezo-Jet-Düse umfaßt.

40. Druck- oder Lackieranlage nach einem der Ansprüche 35 bis 39, **dadurch gekennzeichnet, daß** die zumindest eine Düse an ein Ventil (17), insbesondere ein Piezoventil oder ein elektromagnetisch gesteuertes Ventil angeschlossen ist oder durch das Ventil (17) betätigt wird.

41. Druck- oder Lackieranlage nach einem der Ansprüche 35 bis 40, **dadurch gekennzeichnet, daß** die Einrichtung zum Verfestigen der beschichteten Oberfläche der Unterlage eine Trocknungseinrichtung (6), insbesondere eine Infrarot- und/oder Wärmetrocknungseinrichtung umfaßt.

42. Druck- oder Lackieranlage nach einem der Ansprüche 35 bis 41, **dadurch gekennzeichnet, daß** die Einrichtung zum Verfestigen der beschichteten Oberfläche der Unterlage eine UV-Härtungseinrichtung (8) umfaßt.

43. Druck- oder Lackieranlage nach einem der Ansprüche 35 bis 42, **gekennzeichnet durch** eine Einrichtung zur Ausrichtung der Unterlage relativ zum Dosierkopf (10).

44. Druck- oder Lackieranlage nach einem der Ansprüche 35 bis 43, **gekennzeichnet durch** eine Einrichtung (36) zur Positionsmessung der Unterlage.

45. Druck- oder Lackieranlage nach einem der Ansprüche 35 bis 44, **gekennzeichnet durch** eine Vorwärmeinrichtung zur Vorerwärmung des fluiden Beschichtungsmaterials.

46. Druck- oder Lackieranlage nach einem der Ansprüche 35 bis 45, **gekennzeichnet durch** zumindest eine der Düse vorgeschaltete Pumpeinrichtung (23).

47. Druck- oder Lackieranlage nach einem der Ansprüche 35 bis 46, **dadurch gekennzeichnet, daß** sie eine Einspritzeinrichtung für einen Verbrennungsmotor umfaßt.

48. Druck- oder Lackieranlage nach einem der Ansprüche 35 bis 47, **dadurch gekennzeichnet, daß** die Beschichtungseinheit (4, 200) in eine Beschichtungseinrichtung (110) mit einem staubdichten Gehäuse (120) integriert ist, wobei die Beschichtungseinrichtung (110) eine Einrichtung zum Reinigen der Beschichtungseinheit (4,200) aufweist.

49. Druck- oder Lackieranlage nach Anspruch 48, **dadurch gekennzeichnet, daß** die Beschichtungseinheit (4,200) beweglich aufgehängt ist und von einer Beschichtungsposition in eine Reinigungsposition bewegt werden kann.

50. Druck- oder Lackieranlage nach Anspruch 49, wobei die Beschichtungseinrichtung (110) während des Reinigungsvorganges staubdicht verschlossen ist.

51. Druck- oder Lackieranlage nach einem der Ansprüche 35 bis 50, **gekennzeichnet durch** zumindest zwei parallel zueinander angeordnete Dosierköpfe (250) mit jeweils zumindest zwei in Reihe angeordneten Düsen (260) .

52. Druck- oder Lackieranlage nach Anspruch 51, **dadurch gekennzeichnet, daß** die zumindest zwei Dosierköpfe (250) entlang der Bewegungsrichtung (310) einer zu beschichtenden Oberfläche (3) versetzt angeordnet sind.

53. Druck- oder Lackieranlage nach einem der Ansprüche 51 oder 52, **dadurch gekennzeichnet, daß** die zumindest zwei Dosierköpfe (250) entlang der Bewegungsrichtung (310) einer zu beschichtenden Oberfläche (3) gestaffelt angeordnet sind, wobei die Reihen von Düsen (260) der Dosierköpfe (250) überlappen.

54. Druck- oder Lackieranlage nach einem der Ansprüche 51 bis 53, **dadurch gekennzeichnet, daß** die Achse, entlang der die Düsen (260) auf den Dosierköpfen (250) angeordnet sind, zu der Bewegungsrichtung (310) einer zu beschichtenden Oberfläche (3) einen Winkel zwischen 0° und 90° aufweist.

## Claims

1. Method for applying embossed structured coatings to surfaces in a printing or spraying installation with a device (1) which comprises at least one dosing head (10) which comprises at least one nozzle (16) which is adapted to be controlled by a control signal, **characterised by** the steps:
- movement of an underlay (2) with a surface (3) to be coated along this surface (3) relative to the dosing head (10) and / or movement of the dosing head (10) relative to a surface (3) of an underlay (2) to be coated, and
- structured coating with embossed structures through application of a transparent fluid coating material (22) to the surface through the nozzle (16) in response to at least one control signal generated by a computer (12),
- solidification of the coating material (22) on the surface with a solidifying device.

2. Method according to claim 1, **characterised in that** the device (1) is integrated into an existing printing or spraying installation.

3. Method according to claim 1 or 2, **characterised in that** the step of applying a fluid coating material to the surface comprises the step of applying a fluid coating material through a bubblejet nozzle and / or an inkjet or piezo jet nozzle.

4. Method according to one of the claims 1 to 3, **characterised in that** the step of applying a fluid coating material comprises the step of opening a valve (17), particularly a piezo valve or an electromagnetically controlled valve.

5. Method according to one of the claims 1 to 4, **characterised in that** the step of applying a fluid coating material comprises the step of applying a fluid coating material which comprises a thermoplastic plastic.

6. Method according to claim 5, **characterised in that** the thermoplastic plastic comprises a plastic from a group which includes polyethylene, polypropylene, polyacrylate, polymethylacrylate, polyacryl nitrile, polybutadiene, polyamide, polyester, polyether, polyether ketones, polyvinyl acetates, polyacetals, polyvinyl acetates, polyolefines, polycarbonate, polyether block amides, PSU, PES, PPS, PVC, PVDC, PET, PS, PTFE, PVDF, PF, polyimides, polyimide derivatives, cellulose derivatives and copolymerisates.

7. Method according to one of the claims 1 to 6, **characterised in that** the step of applying a fluid coating material comprises the step of applying a coating material which comprises a dissolved plastic.

8. Method according to one of the claims 1 to 7, **characterised in that** the step of applying a fluid coating material comprises the step of applying a coating material which comprises at least one component of a chemical reactive system.

9. Method according to claim 8, **characterised in that** the chemical reactive system comprises an isocyanate curing system and / or a polyurethane and / or an epoxide system and / or a silicone and / or a derivative of one of these systems.

10. Method according to one of the claims 1 to 9, **characterised in that** the step of applying a fluid coating material comprises the step of applying a coating material which comprises at least one component of a thermally curable system.

11. Method according to claim 10, **characterised in that** the thermally curable system comprises a polyester melamine and / or a urea resin and / or an epoxide system and / or a polyester system.

12. Method according to one of the claims 1 to 11, **characterised in that** the step of applying a fluid coating material comprises the step of applying a coating material which comprises at least one component of a radiation hardenable system.

13. Method according to claim 12, **characterised in that** the radiation hardenable system comprises an acrylate and / or a methacrylate and / or a polyvinyl ether and / or a polyester and / or a maleic acid compound and / or a fumaric acid compound and / or an epoxide and / or a styrol compound and / or a silicone acrylate.

14. Method according to one of the preceding claims, **characterised in that** the step of solidifying the fluid coating material on the surface comprises the step of drying the coating material.

15. Method according to one of the preceding claims, **characterised in that** the step of solidifying the fluid coating material on the surface comprises the step of UV hardening of the coating material.

16. Method according to one of the preceding claims, **characterised in that** the step of solidifying the fluid coating material on the surface comprises the step of polymerisation of the coating material.

17. Method according to one of the preceding claims, **characterised in that** the step of solidifying the fluid coating material on the surface comprises the step of curing, particularly of thermal curing.

18. Method according to one of the claims 1 to 17, **characterised in that** the step of solidifying the fluid coating material on the surface comprises the step of reacting of the coating material with a pre-coating and / or an after-coating on the surface (3).

19. Method according to one of the claims 1 to 18, wherein the dosing head comprises at least one first nozzle and at least one second nozzle, **characterised in that** the step of applying a fluid coating material to the surface through the nozzle (16) in response to a control signal generated by a computer (12) comprises the step of applying a first coating material through the at least one first nozzle and a second coating material through the at least one second nozzle.

20. Method according to one of the claims 1 to 19, **characterised in that** the step of moving an underlay (2) with a surface (3) to be coated along this surface (3) relative to the dosing head (10) and / or moving the dosing head (10) relative to a surface (3) of an underlay (2) to be coated comprises the step of feeding the underlay (2) in a first direction (54).

21. Method according to claim 20, **characterised in that** the underlay (2) is moved relative to the dosing head (10) along the first direction with a speed of up to 2000 metres per minute, preferably with a speed of up to 500 metres per minute, by preference with a speed of 150 metres per minute or more and particularly preferably with a speed of 300 metres per minute or more.

22. Method according to claim 20 or 21, **characterised in that** the step of moving an underlay (2) with a surface (3) to be coated along this surface (3) relative to the dosing head (10) and / or moving the dosing head (10) relative to a surface (3) of an underlay (2) to be coated comprises the step of moving the dosing head along a second direction (56) running transversely, preferably substantially perpendicularly, to the first direction.

23. Method according to one of the claims 1 to 22, **characterised in that** the fluid coating material (22) is preheated.

24. Method according to claim 23, **characterised in that** the fluid coating material is preheated up to 300°C, preferably up to 125°C, particularly preferably up to 80°C.

25. Method according to one of the claims 1 to 24, **characterised in that** the fluid coating material is applied with a viscosity of 8 to 100 mPa·s, preferably 8 to 50 mPa·s and particularly preferably 8 to 25 mPa·s.

26. Method according to one of the claims 1 to 26, **characterised in that** the fluid coating material (22) at room temperature has a viscosity in the range from 50 mPa·s to 10 mPa·s, preferably from 50 mPa·s to 1 Pa.s, particularly preferably from 50 mPa·s to 250 mPa·s.

27. Method according to one of the claims 1 to 26, **characterised in that** the fluid coating material (22) is fed to the nozzle under overpressure.

28. Method according to one of the claims 1 to 27, **characterised in that** the underlay (2) to be coated is rolled up on a roll (51) and the step of moving an underlay (2) with a surface (3) to be coated along this surface (3) relative to the dosing head (10) and / or moving the dosing head (10) relative to a surface (3) of an underlay (2) to be coated comprises the step of unrolling the underlay (2) from the roll (51).

29. Method according to one of the claims 1 to 28, **characterised in that** the step of moving an underlay (2) with a surface (3) to be coated along this surface (3) relative to the dosing head (10) and / or moving the dosing head (10) relative to a surface (3) of an underlay (2) to be coated comprises the step of rolling up the underlay (2) onto a roll (52).

30. Method according to one of the claims 1 to 29, **characterised by** the step of orientating the underlay (2) relative to the dosing head (10).

31. Method according to one of the claims 1 to 30, **characterised in that** the step of applying a fluid coating material to the surface (3) through the nozzle (16) in response to a control signal generated by a computer (12) comprises the step of applying coating material to at least one region (64) which has a different refractive index from that of adjacent regions (62).

32. Method according to clam 31, **characterised in that** the at least one region defines an optical element, particularly a waveguide (68).

33. Method according to one of the claims 1 to 32, **characterised in that** the step of applying a fluid coating material to the surface (3) through the nozzle in response to a control signal generated by a computer (12) comprises the step of illustrating a printing form (46).

34. Method according to one of the claims 1 to 33, **characterised in that** the steps of
- movement of an underlay (2) with a surface (3) to be coated along this surface (3) relative to the dosing head (10) and / or movement of the dosing head (10) relative to a surface (3) of an underlay (2) to be coated, and of
- application of a fluid coating material to the surface through the nozzle in response to a control signal generated by a computer (12)
are carried out repeatedly.

35. Printing or spraying installation with an integrated device (1) for structured application of transparent embossed coatings, particularly in accordance with a method according to one of the claims 1 to 35, comprising at least one coating unit (4) which comprises at least one dosing head (10) which comprises at least one nozzle (16) which can be controlled in response to a computer-generated control signal, and
a device (5) for moving an underlay (2) with a surface (3) to be coated along this surface (3) relative to the dosing head (10) and / or for moving the dosing head (10) relative to a surface (3) of an underlay (2) to be coated in such a way that through the computer-based control of the at least one nozzle in association with the movement of the underlay along the surface relative to the dosing head the point-precise structured coating of the surface with a coating with embossed structures is facilitated, and a device for solidifying the fluid coating material on the surface of the underlay.

36. Printing or spraying installation according to claim 35, **characterised in that** the dosing head (10) is arranged in such a way that the at least one nozzle does not touch the underlay (2) to be coated.

37. Printing or spraying installation according to claim 35 or 36, **characterised in that** the device (5) for moving an underlay (2) with a surface (3) to be coated along this surface (3) relative to the dosing head (10) and / or for moving the dosing head (10) relative to a surface (3) of an underlay (2) to be coated comprises a transport device (53, 55) for transporting the underlay (2) along a first direction (54).

38. Printing or spraying installation according to claim 37, **characterised in that** the coating unit (4) comprises a device (38, 40, 42, 44) for moving the dosing head (10) along a second direction (56) which is substantially perpendicular to the first direction (54).

39. Printing or spraying installation according to one of the claims 35 to 38, **characterised in that** the at least one nozzle (16) comprises a bubblejet nozzle and / or an inkjet nozzle or piezo jet nozzle.

40. Printing or spraying installation according to one of the claims 35 to 39, **characterised in that** the at least one nozzle is connected to a valve (17), particularly a piezo valve or an electromagnetically controlled valve or is actuated through the valve (17).

41. Printing or spraying installation according to one of the claims 35 to 40, **characterised in that** the device for solidifying the coated surface of the underlay comprises a drying device (6), particularly an infrared and / or thermal drying device.

42. Printing or spraying installation according to one of the claims 35 to 41, **characterised in that** the device for solidifying the coated surface of the underlay comprises a UV hardening device (8).

43. Printing or spraying installation according to one of the claims 35 to 42, **characterised by** a device for orientating the underlay relative to the dosing head (10).

44. Printing or spraying installation according to one of the claims 35 to 43, **characterised by** a device (36) for position measurement of the underlay.

45. Printing or spraying installation according to one of the claims 35 to 44, **characterised by** a preheating device for preheating the fluid coating material.

46. Printing or spraying installation according to one of the claims 35 to 45, **characterised by** at least one pumping device (23) connected before the nozzle.

47. Printing or spraying installation according to one of the claims 35 to 46, **characterised in that** it comprises an injection device for an internal combustion engine.

48. Printing or spraying installation according to one of the claims 35 to 47, **characterised in that** the coating unit (4, 200) is integrated into a coating device (110) with a dustproof housing (120) whereby the coating device (110) comprises a device for cleaning the coating unit (4, 200).

49. Printing or spraying installation according to claim 48, **characterised in that** the coating unit (4, 200) is suspended so as to be movable and can be moved from a coating position into a cleaning position.

50. Printing or spraying installation according to claim 49, wherein the coating device (110) is closed in a dustproof way during the cleaning process.

51. Printing or spraying installation according to one of the claims 35 to 50, **characterised by** at least two dosing heads (250) arranged parallel to each other and each having at least two nozzles (260) arranged in a row.

52. Printing or spraying installation according to claim 51, **characterised in that** the at least two dosing heads (250) are arranged in an offset way along the movement direction (310) of a surface (3) to be coated.

53. Printing or spraying installation according to one of the claims 51 or 52, **characterised in that** the at least two dosing heads (250) are arranged in a staggered way along the movement direction (310) of a surface (3) to be coated, whereby the rows of nozzles (260) of the dosing heads (250) overlap.

54. Printing or spraying installation according to one of the claims 51 to 53, **characterised in that** the axis, along which the nozzles (160) are arranged on the dosing heads (250), is arranged at an angle between 0° and 90° with respect to the movement direction (310) of a surface (3) to be coated.

## Revendications

1. Procédé pour appliquer des revêtements structurés en relief sur des surfaces dans une installation d'impression ou de vernissage équipée d'un dispositif (1) qui comprend au moins une tête doseuse (10) comportant une buse (16) activable par un signal de commande, **caractérisé par** les étapes suivantes, qui consistent :
- à amener un substrat (2), présentant une surface (3) à revêtir, à se mouvoir le long de cette surface (3) relativement à la tête doseuse (10) et/ou à amener la tête doseuse (10) à se mouvoir relativement à une surface à revêtir (3) d'un substrat (2), et
- à produire un revêtement structuré, présentant des structures en relief, par application d'une matière de revêtement fluide transparente (22) sur la surface au moyen de la buse (16) en réponse à au moins un signal de commande généré par un ordinateur (12),
- à consolider la matière de revêtement (22) sur la surface avec un moyen de consolidation.

2. Procédé suivant la revendication 1, **caractérisé en ce que** le dispositif (1) s'intègre dans une installation d'impression ou de vernissage.

3. Procédé suivant la revendication 1 ou 2, **caractérisé en ce que** l'étape d'application d'une matière fluide de revêtement sur la surface comprend l'étape d'application d'une matière fluide de revêtement par une buse à bubble-jet et/ou une buse à ink-jet ou à piézo-jet.

4. Procédé suivant l'une des revendications 1 à 3, **caractérisé en ce que** l'étape d'application d'une matière fluide de revêtement comprend l'étape d'ouverture d'une vanne (17), en particulier d'une vanne piézoélectrique ou d'une vanne à commande électromagnétique.

5. Procédé suivant l'une des revendications 1 à 4, **caractérisé en ce que** l'étape d'application d'une matière fluide de revêtement comprend l'étape d'application d'une matière fluide de revêtement qui contient une matière thermoplastique.

6. Procédé suivant la revendication 5, **caractérisé en ce que** la matière thermoplastique consiste en une matière plastique du groupe qui comprend un polyéthylène, un polypropylène, un polyacrylate, un polyméthacrylate, un polyacrylonitrile, un polybutadiène, un polyamide, un polyester, un polyéther, des polyéthercétones, des polymères d'acétate de vinyle, des polyacétals, des polymères d'acétate de vinyle, des polyoléfines, un polycarbonate, des polyamides à blocs éther, des polymères PSU, PES, PPS, PVC, PVDC, PET, PS, PTFE, PVDF, PF, des polyimides, des dérivés de polyimides, des dérivés de cellulose et des produits de copolymérisation.

7. Procédé suivant l'une des revendications 1 à 6, **caractérisé en ce que** l'étape d'application d'une matière fluide de revêtement comprend l'étape d'application d'une matière de revêtement qui contient une matière plastique dissoute.

8. Procédé suivant l'une des revendications 1 à 7, **caractérisé en ce que** l'étape d'application d'une matière fluide de revêtement comprend l'étape d'application d'une matière de revêtement qui contient au moins un composant d'un système réactif chimique.

9. Procédé suivant la revendication 8, **caractérisé en ce que** le système réactif chimique comprend un système à réticulation par un isocyanate et/ou un polyuréthanne et/ou un système époxyde et/ou une silicone et/ou un dérivé de l'un de ces systèmes.

10. Procédé suivant l'une des revendications 1 à 9, **caractérisé en ce que** l'étape d'application d'une matière fluide de revêtement comprend l'étape d'application d'une matière de revêtement qui comporte au moins un composant d'un système réticulable par voie thermique.

11. Procédé suivant la revendication 10, **caractérisé en ce que** le système réticulable par voie thermique est un système polyester-mélamine et/ou une résine d'urée et/ou un système époxyde et/ou un système polyesther.

12. Procédé suivant l'une des revendications 1 à 11, **caractérisé en ce que** l'étape d'application d'une matière fluide de revêtement comprend l'étape d'application d'une matière de revêtement qui contient au moins un composant d'un système durcissable par irradiation.

13. Procédé suivant la revendication 12, **caractérisé en ce que** le système durcissable par irradiation comprend un acrylate et/ou un méthacrylate et/ou un polymère d'éther de vinyle et/ou un polyester et/ou un composé d'acide maléique et/ou un composé d'acide fumarique et/ou un époxyde et/ou un composé de styrène et/ou un acrylate de silicone.

14. Procédé suivant l'une des revendications précédentes, **caractérisé en ce que** l'étape de consolidation de la matière fluide de revêtement sur la surface comprend l'étape de séchage de la matière de revêtement.

15. Procédé suivant l'une des revendications précédentes, **caractérisé en ce que** l'étape de consolidation de la matière fluide de revêtement sur la surface comprend l'étape de durcissement par rayons UV de la matière de revêtement.

16. Procédé suivant l'une des revendications précédentes, **caractérisé en ce que** l'étape de consolidation de la matière fluide de revêtement sur la surface comprend l'étape de polymérisation de la matière de revêtement.

17. Procédé suivant l'une des revendications précédentes, **caractérisé en ce que** l'étape consolidation de la matière fluide de revêtement sur la surface comprend l'étape de réticulation, en particulier de réticulation thermique.

18. Procédé suivant l'une des revendications 1 à 17, **caractérisé en ce que** l'étape de consolidation de la matière fluide de revêtement sur la surface comprend l'étape de réaction de la matière de revêtement avec un pré-revêtement et/ou avec un post-revêtement sur la surface (1).

19. Procédé suivant l'une des revendications 1 à 18, dans lequel la tête doseuse comporte au moins une première buse et au moins une seconde buse, **caractérisé en ce que** l'étape d'application d'une matière fluide de revêtement sur la surface par la buse (16) en réponse à un signal de commande généré par un ordinateur (12) comprend l'étape d'application d'une première matière de revêtement par la première buse, dont au moins une est présente, et d'une seconde matière de revêtement par la seconde buse, dont au moins une est présente.

20. Procédé suivant l'une des revendications 1 à 19, **caractérisé en ce que** l'étape de mise en mouvement d'un substrat (2), présentant une surface (3) à revêtir, le long de cette surface (3) relativement à la tête doseuse (10) et/ou de mise en mouvement de la tête doseuse (10) relativement à une surface à revêtir (3) d'un substrat (2) comprend l'étape consistant à faire avancer le substrat (2) dans une première direction (54).

21. Procédé suivant la revendication 20, **caractérisé en ce que** le substrat (2) est mû relativement à la tête doseuse (10) suivant la première direction à une vitesse allant jusqu'à 2000 mètres par minute, avantageusement à une vitesse allant jusqu'à 500 mètres par minute, préférentiellement à une vitesse de 150 mètres par minute ou plus et notamment à une vitesse de 300 mètres par minute ou plus.

22. Procédé suivant la revendication 20 ou 21, **caractérisé en ce que** l'étape de mise en mouvement d'un substrat (2), présentant une surface (3) à revêtir, le long de cette surface (3) relativement à la tête doseuse (10) et/ou de mise en mouvement de la tête doseuse (10) relativement à une surface à revêtir (3) d'un substrat (2) comprend l'étape de mise en mouvement de la tête doseuse suivant une seconde direction (56) qui s'étend transversalement à la première direction en formant avantageusement un angle sensiblement droit.

23. Procédé suivant l'une des revendications 1 à 22, **caractérisé en ce que** la matière fluide (22) de revêtement est préalablement chauffée.

24. Procédé suivant la revendication 23, **caractérisé en ce que** la matière fluide de revêtement est préalablement chauffée à une température allant jusqu'à 300°C, avantageusement jusqu'à 125°C, notamment jusqu'à 80°C.

25. Procédé suivant l'une des revendications 1 à 24, **caractérisé en ce que** la matière fluide de revêtement a, lorsqu'elle est appliquée, une viscosité de 8 à 100 mPa.s, avantageusement de 8 à 50 mPa.s et notamment de 8 à 25 mPa.s.

26. Procédé suivant l'une des revendications 1 à 25, **caractérisé en ce que** la matière fluide (22) de revêtement a une viscosité à la température ambiante comprise dans une plage de 50 mPa.s à 10 mPa.s, avantageusement de 50 mPa.s à 1 Pa.s, notamment de 50 mPa.s à 250 mPa.s.

27. Procédé suivant l'une des revendications 1 à 26, **caractérisé en ce que** la matière fluide (22) de revêtement est amenée en surpression à la buse.

28. Procédé suivant l'une des revendications 1 à 27, **caractérisé en ce que** le substrat (2) à revêtir est enroulé sur un rouleau (51) et l'étape de mise en mouvement d'un substrat (2) présentant une surface (3) à revêtir suivant cette surface (3) relativement à la tête doseuse (10), et/ou de mise en mouvement de la tête doseuse (10) relativement à une surface à revêtir (3) d'un substrat (2), comprend l'étape consistant à dérouler le substrat (2) du rouleau (51).

29. Procédé suivant l'une des revendications 1 à 28, **caractérisé en ce que** l'étape de mise en mouvement d'un substrat (2), présentant une surface (3) à revêtir, suivant cette surface (3) relativement à la tête doseuse (10) et/ou de mise en mouvement de la tête doseuse (10) relativement à une surface à revêtir (3) d'un substrat (2), comprend l'étape d'enroulement du substrat (2) sur un rouleau (52).

30. Procédé suivant l'une des revendications 1 à 29, **caractérisé par** l'étape d'alignement du substrat (2) par rapport à la tête doseuse (10).

31. Procédé suivant l'une des revendications 1 à 30, **caractérisé en ce que** l'étape d'application d'une matière fluide de revêtement sur la surface (3) par la buse (16) en réponse à un signal de commande généré par un ordinateur (12) comprend l'étape d'application de matière de revêtement sur au moins une région (64) qui possède un indice de réfraction différent de celui des régions adjacentes (62).

32. Procédé suivant la revendication 31, **caractérisé en ce que** la région dont au moins une existe définit un élément optique, en particulier un guide d'ondes (68).

33. Procédé suivant l'une des revendications 1 à 32, **caractérisé en ce que** l'étape d'application d'une matière fluide de revêtement sur la surface (3) par la buse en réponse à un signal de commande généré par un ordinateur (12) comprend l'étape de formation d'illustrations par un cylindre d'impression (46).

34. Procédé suivant l'une des revendications 1 à 33, **caractérisé en ce que** les étapes
- de mise en mouvement d'un substrat (2), présentant une surface (3) à revêtir, suivant cette surface (3) relativement à la tête doseuse (10) et/ou de mise en mouvement de la tête doseuse (10) relativement à une surface à revêtir (3) d'un substrat (2), et
- d'application d'une matière fluide de revêtement sur la surface par la buse en réponse à un signal de commande généré par un ordinateur (12), sont conduites de façon répétée.

35. Installation d'impression et de vernissage intégrant un dispositif (1) pour l'application structurée de revêtements transparents en relief, en particulier conformément à un procédé suivant l'une des revendications 1 à 35, comportant au moins une unité de revêtement (4) qui comprend au moins une tête doseuse (10), laquelle comprend au moins une buse (16) pouvant être activée en réponse à un signal de commande généré par ordinateur, et
un moyen (5) amenant un substrat (2), qui présente une surface (3) à revêtir, à se mouvoir suivant cette surface (3) relativement à la tête doseuse (10) et/ou amenant la tête doseuse (10) à se mouvoir relativement à la surface à revêtir (3) d'un substrat (2) de manière à rendre possible, par l'activation assistée par ordinateur d'au moins une buse présente en liaison avec le mouvement du substrat suivant la surface relativement à la tête doseuse, le revêtement structuré, de précision ponctuelle, de la surface avec formation de structures de revêtement en relief, ainsi qu'un moyen de consolidation de la matière fluide de revêtement sur la surface du substrat.

36. Installation d'impression et de vernissage suivant la revendication 35, **caractérisée en ce que** la tête doseuse (10) est disposée de façon telle que la buse dont au moins une est présente ne touche pas le substrat (2) à revêtir.

37. Installation d'impression et de vernissage suivant la revendication 35 ou 36, **caractérisée en ce que** le moyen (5) qui amène à se mouvoir un substrat (2) présentant une surface (3) à revêtir suivant cette surface (3) relativement à la tête doseuse (10) et/ou qui amène la tête doseuse (10) à se mouvoir relativement à une surface à revêtir (3) d'un substrat (2), comprend un dispositif de transport (53, 55) servant à transporter le substrat (2) suivant une première direction (54).

38. Installation d'impression et de vernissage suivant la revendication 37, **caractérisée en que** l'unité de revêtement (4) comprend un ensemble (38, 40, 42, 44) amenant la tête doseuse (10) à se mouvoir suivant une seconde direction (56) sensiblement perpendiculaire à la première direction (54).

39. Installation d'impression et de vernissage suivant l'une des revendications 35 à 38, **caractérisée en ce que** la buse (16) dont au moins une est présente consiste en une buse à bubble-jet et/ou une buse à ink-jet ou à piézo-jet.

40. Installation d'impression ou de vernissage suivant l'une des revendications 35 à 39, **caractérisée en ce que** la buse, dont au moins une est présente, est raccordée à une vanne (17), en particulier à une vanne piézoélectrique ou à une vanne à commande électromagnétique, ou actionnée par la vanne (17).

41. Installation d'impression ou de vernissage suivant l'une des revendications 35 à 40, **caractérisée en ce que** le moyen de consolidation du revêtement de la surface du substrat consiste en un dispositif de séchage (6), en particulier un dispositif de séchage aux rayons infrarouges et/ou à la chaleur.

42. Installation d'impression ou de vernissage suivant l'une des revendications 35 à 41, **caractérisée en ce que** le moyen de consolidation du revêtement de la surface du substrat consiste en un dispositif (8) de durcissement aux rayons ultraviolets.

43. Installation d'impression ou de vernissage suivant l'une des revendications 35 à 42, **caractérisée par** un dispositif d'alignement du substrat par rapport à la tête doseuse (10).

44. Installation d'impression ou de vernissage suivant l'une des revendications 35 à 43, **caractérisée par** un dispositif (36) servant à la mesure de la position du substrat.

45. Installation d'impression ou de vernissage suivant l'une des revendications 35 à 44, **caractérisée par** un dispositif de préchauffage servant à chauffer préalablement la matière fluide de revêtement.

46. Installation d'impression ou de vernissage suivant l'une des revendications 35 à 45, **caractérisée en ce qu'**elle comprend au moins un dispositif de pompage (23) installé en amont de la buse.

47. Installation d'impression ou de vernissage suivant l'une des revendications 35 à 46, **caractérisée en ce qu'**elle comprend un dispositif d'injection pour un moteur thermique.

48. Installation d'impression ou de vernissage suivant l'une des revendications 35 à 47, **caractérisée en ce que** l'unité de revêtement (4, 200) est intégrée dans un dispositif de revêtement (110) à boîtier (120) étanche à la poussière, le dispositif de revêtement (110) comportant un système de nettoyage de l'unité de revêtement (4, 200).

49. Installation d'impression ou de vernissage suivant la revendication 48, **caractérisée en ce que** l'unité de revêtement (4, 200) est suspendue de manière à pouvoir se mouvoir et peut passer d'une position de revêtement à une position de nettoyage.

50. Installation d'impression ou de vernissage suivant la revendication 49, dans laquelle le dispositif de revêtement (110) est fermé de façon étanche à la poussière pendant le processus de nettoyage.

51. Installation d'impression ou de vernissage suivant l'une des revendications 35 à 50, **caractérisée par** au moins deux têtes doseuses (250) parallèles entre elles, ayant chacune au moins deux buses (260) disposées en série.

52. Installation d'impression ou de vernissage suivant la revendication 51, **caractérisée en ce que** les têtes doseuses (250) au moins au nombre de deux ont une disposition décalée suivant la direction (310) de mouvement d'une surface (3) à revêtir.

53. Installation d'impression ou de vernissage suivant l'une des revendications 51 ou 52, **caractérisée en ce que** les têtes doseuses (250) au moins au nombre de deux ont une disposition échelonnée suivant la direction (310) d'une surface (3) à revêtir, les séries de buses (260) des têtes doseuses (250) se chevauchant.

54. Installation d'impression ou de vernissage suivant l'une des revendications 51 à 53, **caractérisée en ce que** l'axe suivant lequel les buses (260) sont disposées sur les têtes doseuses (250) fait un angle compris entre 0° et 90° avec la direction (310) de mouvement d'une surface (3) à revêtir.
